## Europäisches Patentamt
## European Patent Office
## Office européen des brevets

(11) Publication number: **0 143 553**
**B1**

(12) **EUROPEAN PATENT SPECIFICATION**

(45) Date of publication of patent specification: **04.01.89**

(21) Application number: **84307387.5**

(22) Date of filing: **26.10.84**

(51) Int. Cl.⁴: **G 11 B 5/09**

(54) **Methods of and apparatus for digital data conversion.**

(30) Priority: **27.10.83 JP 201587/83**

(43) Date of publication of application:
**05.06.85 Bulletin 85/23**

(45) Publication of the grant of the patent:
**04.01.89 Bulletin 89/01**

(84) Designated Contracting States:
**DE FR GB NL**

(56) References cited:
**EP-A-0 116 020**
**EP-A-0 123 563**
**DD-A- 202 084**
**GB-A-2 083 322**
**GB-A-2 117 603**

**R. GORNY "Einführung in die Datenverarbeitung", 1974 SIEMENS AKTIENGESELLSCHAFT, "Magnetschichtspeicher", Berlin und München pages 87-90**

(73) Proprietor: **SONY CORPORATION**
**7-35 Kitashinagawa 6-Chome Shinagawa-ku Tokyo 141 (JP)**

(72) Inventor: **Fukuda, Shinichi c/o Sony Corporation**
**Patents Division 7-35 Kitashinagawa 6-chome Sinagawa-ku Tokyo (JP)**
Inventor: **Kojima, Yuichi c/o Sony Corporation**
**Patents Division 7-35 Kitashinagawa 6-chome Shinagawa-ku Tokyo (JP)**

(74) Representative: **Thomas, Christopher Hugo et al**
**D Young & Co 10 Staple Inn London WC1V 7RD (GB)**

Courier Press, Leamington Spa, England.

## Description

This invention relates to methods of and apparatus for digital data conversion and, more particularly, but not exclusively, to such methods and apparatus suitable for use where a digital signal is to be transmitted or recorded.

It is well known that an analog audio signal can be recorded and reproduced with high fidelity by converting the analog audio signal into a pulse code modulated (PCM) audio signal which is magnetically recorded without guard bands using a rotary head, and is then reproduced and reconverted to analog form. However, in addition to the possibility of a differential output characteristic of the magnetic recording and a low frequency cross-talk component generated from adjacent tracks, low frequency components tend to be cut off by a rotary transformer associated with the rotary head, so that there is some loss of fidelity in the low frequency region.

Accordingly, as such apparatus is required to have a narrow record and playback frequency band and a small low frequency component, it is preferred to modulate a record signal having a low frequency component or a DC component using a modulation system which produces a small amount of low frequency component. The so-called non-return to zero, inverted (NRZI) modulation system is an example of such a modulation system. In the NRZI system, a signal is inverted at level "1" in the data signal, and is not inverted at level "0".

However, in the NRZI system, when consecutive digital zeroes appear, the modulated signal is not inverted during that period, and the frequency thereof becomes low, so the defect occurs that the DC component and the low frequency component are increased.

Therefore, it has been proposed to divide the PCM digital information into groups of a predetermined number of bits and to convert the respective groups of bits to groups having a larger number of bits, so avoiding the occurrence of a large number of consecutive digital zeroes.

UK patent specification GB—A—2 083 322 discloses a run length limited block coding method with reduced DC component.

We have previously proposed, for example, in our European patent specification EP—A2—0 123 563, published after 26.10.84, an information converting system as follows. This system employs an 8/10 converting scheme in which each eight bits of digital information in a basic digital signal are converted to a 10-bit word to form a converted digital signal. Eight bits ($B_1$, $B_2$, $B_3$, $B_4$, $B_5$, $B_6$, $B_7$, $B_8$) can have 256 ($2^8$) combinations. With ten bits, 1024 ($2^{10}$) combinations are possible. Thus, 256 of the 1024 possible 10-bit combinations are used to represent the 8-bit combinations.

In accordance with the conditions set forth above, there are certain constraints on which 256 combinations can be used. Firstly, those conditions require that the DC component (or charge) in the converted signal be zero. Secondly, because NRZI coding is being used, the number of consecutive digital zeroes in the converted signal must never exceed three, otherwise $T_{max}/T_{min}$ (where $T_{max}$ is the maximum interval between level transitions and $T_{min}$ is minimum interval between transitions) will be greater than four.

With those constraints, the following Table I shows the possible combinations of ten digital bits in NRZI code for which the DC component is zero, but in which there are no more than three consecutive digital zeroes (either internally of each 10-bit word or at the junction between two such words):

### TABLE I

|  | · · · · · 1 | · · · · · 10 | · · · · · 100 | · · · · · 1000 |
|---|---|---|---|---|
| 1 · · · · · · | 69 | 34 | 14 | 4 |
| 01 · · · · · | 40 | 20 | 8 | 1 |
| 001 · · · · | 20 | 10 | 3 | 1 |
| 0001 · · · | 8 | 3 | 2 | 1 |

Table I shows that there are numerous possible combinations that will satisfy the constraints. For example, if up to three digital zeroes are permitted at the beginning of each word, then no digital zeroes can be permitted at the end of any word. In that case, Table I shows that the total of the possible combinations is:

2

$$137 = 69 + 40 + 20 + 8$$

From all of the possible combinations in Table I, the maximum total is achieved if no more than two digital zeroes are permitted at the beginning of a 10-bit converted word and no more that one digital zero is permitted at the end. In that case, the total is:

$$193 = 69 + 40 + 20 + 34 + 20 + 10$$

Thus, 193 10-bit combinations are available for which the DC component is zero. These are called "primary combinations".

Since there are 256 possible 8-bit words of original data, 63 additional 10-bit combinations are required to represent all of the original data. Thus, it is necessary to use 10-bit combinations for which the DC component is not zero.

The following Table II illustrates the number of possible combinations of 10-bit combinations, which begin with no more than two digital zeroes and end with no more than one digital zero, having a DC component of zero, −2 or +2 when NRZI-coded.

## TABLE II

| DC / first bit | | −2 | | 0 | | +2 | |
|---|---|---|---|---|---|---|---|
| 1 ••• | 11 •••••• | 52 | 40 | 103 | 60 | 100 | 43 |
| | 101 | | 11 | | 30 | | 30 |
| | 100 | | 1 | | 13 | | 27 |
| 01 ••• ••• ••• | | 43 | | 60 | | 40 | |
| 001••• ••• ••• | | 30 | | 30 | | 11 | |

From Table II, it is clear that the number of possible combinations in which the DC components is −2 is:

$$52 + 43 + 30 = 125$$

Also it is clear that the number of possible combinations with a DC component of +2 is:

$$100 + 40 + 11 = 151$$

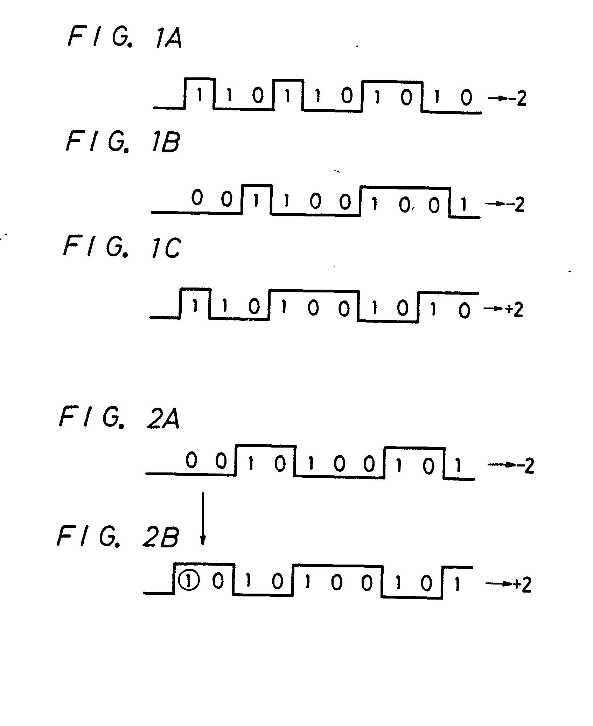

To calculate the DC components for Table II it has been assumed that the last bit of the next-preceding 10-bit combination is at low level, as shown in Figure 2 of the accompanying drawings. If Table II were constructed by assuming that the level of the last bit of the preceding word was high, then the "−2" and "+2" columns would be interchanged as shown in Figures 2A and 2B.

Moreover, the low frequency spectrum of the modulation wave tends to be less if combinations alternately using combinations with DC components +2 and −2 are used more frequently that the combinations with a DC component of zero. Accordingly, the 125 combinations with a pair of +2 and −2 DC components are used, and for the remaining 131 combinations those with a DC component of zero are used to give a total of 256 combinations corresponding respectively to the 256 possible combinations of eight bits.

For the combinations with a pair of +2 and −2 DC components, the pairs may be selected such that the DC component can be controlled merely by changing the first bit (the second bit and the following bits in the combinations of a pair having the same level). Therefore, of the possible combinations.in, for example, Table II, the combinations with DC components of +2 and −2 and the first bit "0" total:

$$40 + 11 + 43 + 30 = 124.$$

Thus it is possible to use these 124 combinations and 132 combinations with a DC component of zero to correspond respectively to 256 combinations of 8 bits. Then, each time a combination with DC components of $\pm 2$ appears, the first bit of the combination is converted in such a manner that the DC component becomes positive and negative alternately.

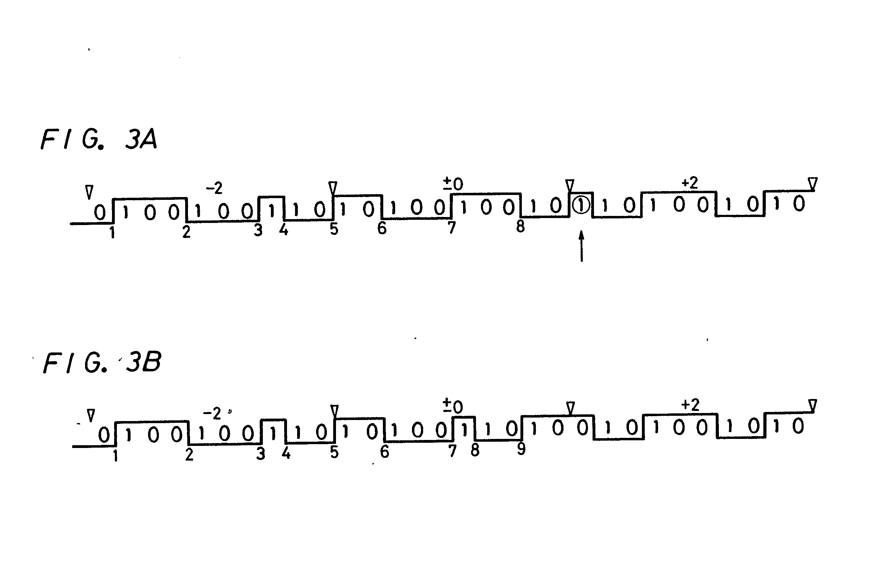

That is, as shown in Figures 3A and 3B of the accompanying drawings, when a combination with DC components of $\pm 2$ appears, the number of level transitions P (the number of digital ones) from the second bit is counted, until the following combination with DC components of $\pm 2$ appears. If the number of level transitions is even, the first bit (shown by an inverted delta) is converted to digital "1" as shown in Figure 3A, while if the number of level transitions is odd, the first bit is left as digital "0" as shown in Figure 3B.

Thus, even if DC components of $\pm 2$ appear, they are cancelled out by DC components $\pm 2$ of the succeeding combinations, and hence regardless of any consecutive digital components, the DC component becomes zero.

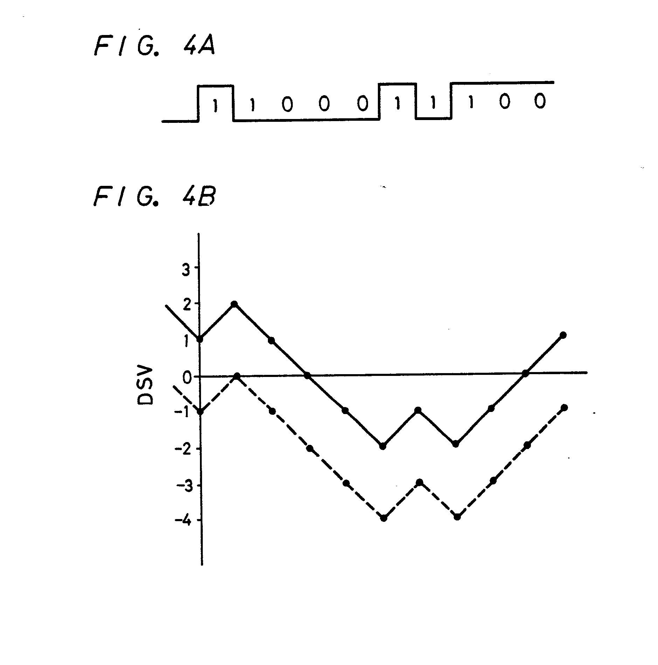

The DC component of each bit is referred to as the digital sum variation (DSV) in some evaulation methods. Let it be considered that a combination is formed of a ten bit pattern with zero DC component as, for example, shown in Figure 4A of the accompanying drawings. When transition of the DSV begins with DSV = 1, the transition of the DSV for this pattern changes as shown by a solid line in Figure 4B of the accompanying drawings.

If the range between the maximum and minimum values of the DSV is small, the DSV has a small DC component and the low frequency component is reduced. In one evaluation method, a parameter which is generally referred to as DSV variance is used. This DSV variance can be obtained by squaring and averaging the DSV value for every bit, and it is considered that this DSV variance should be as small as possible. While the level of DSV = 0 is defined as an average value of the DSV value that each bit has, the level of the DSV regarding the waveform of the combination (code) which has been NRZI-coded is defined as DSV max = −DSV min. Accordingly, in this case, it is convenient that the DSV at the boundary between the respective combinations is taken as +1 or −1 and the intermediate value between DSV max and DSV min is defined as DSV = 0.

Therefore, let us consider the above conversion method using the evaluation method of DSV variance. In the combination as, for example, shown in Figure 4A, when the evaluation of DSV variance begins with DSV = +1, the transition of the DSV changes along the solid line shown in Figure 4B as described above, and the DSV variance can be shown to be 1.7. While, when the evaluation of DSV variance begins with DSV = −1, the transition of DSV changes as shown by a broken line in Figure 4B and the DSV variance at that time becomes 6.9. That is, combinations having the same bit pattern can be made to have different DC characteristics depending on the initial setting of the DSV. Particularly, in this case when the evaluation of the DSV variance begins with DSV = −1, the DSV variance becomes large, which is not preferred.

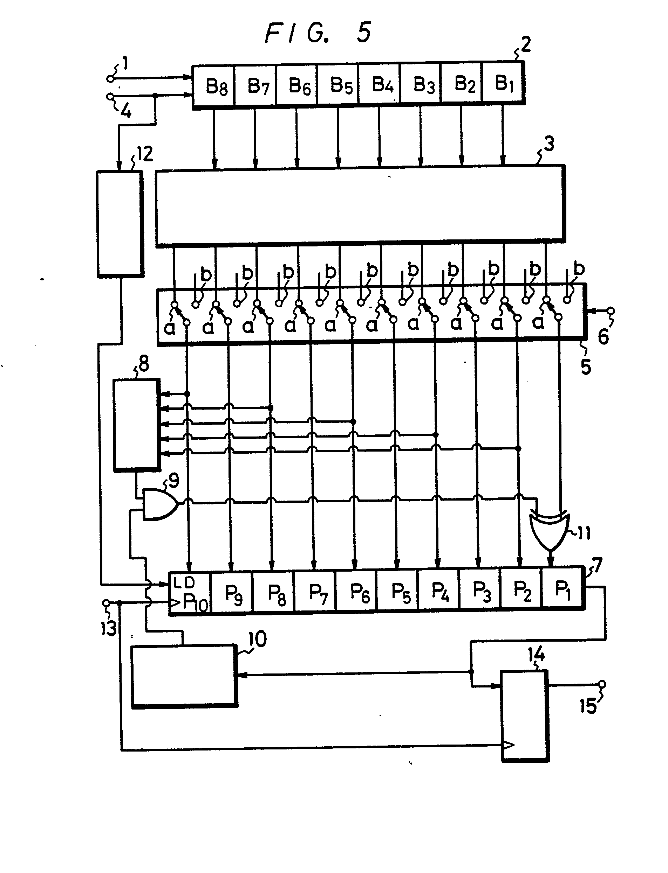

Figure 5 of the accompanying drawings shows an example of an apparatus which is capable of conversion in accordance with the above converting system. The apparatus comprises an input terminal 1, an 8-bit shift register 2 which accepts information of eight bits, a conversion logic circuit 3 which uses, for example, a programmable logic array (PLA), and a clock terminal 4. The information supplied to the input terminal 1 is transferred eight bits at a time through the shift register 2 in response to a pulse which is supplied to the clock terminal 4 at the data bit rate, and the information of eight bits ($B_1$, $B_2$, $B_3$, $B_4$, $B_5$, $B_6$, $B_7$, $B_8$) is supplied to the conversion logic circuit 3.

A data sync (synchronizing) pattern selecting circuit 5 is controlled in selection operation of the basis of a data/sync selection control signal supplied to a terminal 6. When the movable contact of the selecting circuit 5 is changed in position to its contacts $a$, information of ten bits ($P_1$, $P_2$, $P_3$, $P_4$, $P_5$, $P_6$, $P_7$, $P_8$, $P_9$, $P_{10}$) which has been subjected to the above one-to-one conversion in the conversion logic circuit 3 is supplied to a 10-bit shift register 7 to form an output. On the other hand, when the movable contact of the selecting circuit 5 is changed in position to its contacts $b$, the sync pattern which is continuously supplied to the other end (not shown) of each contact $b$ is supplied from the selecting circuit 5. As this sync pattern, a sync pattern which does not appear in this conversion system is used.

A detecting circuit 8 detects whether the first bit is variable or fixed, namely, whether the combination has a DC component of zero or $\pm 2$. For example, the detecting circuit 8 carries out modulo-addition for even-numbered bits of the outputs of the selecting circuit 5, or detects whether the number of digital zeroes of the even-numbered bits is even or odd. When the number is zero (even), the detecting circuit 8 detects or judges that the combination has a DC component $\pm 2$, so that the detecting circuit 8 produces at its output side a high level or digital "1". The output of the detecting circuit 8 is supplied to one input terminal of an AND circuit 9, and the AND circuit 9 is supplied at the other input terminal with an output from a detecting circuit 10 which is provided at the output side of the shift register 7 for detecting DC charge (DSV) of each combination. The detecting circuit 10 supplies the high level output to the input side of the AND circuit 9 when the DSV up to the preceding combination is, for example, −1.

The output of the AND circuit 9 is supplied to one input terminal of an exclusive-OR (ex-OR) circuit 11 which inverts the first bit in level. To the other end of the ex-OR circuit 11 is supplied a first bit $P_1$ of ten bits from the selecting circuit 5. Accordingly, when the output of the AND circuit 9 is "0", the first bit $P_1$ is not inverted in level and is fed to the shift register 7, while when the output of the AND circuit 9 is "1", the first bit $P_1$ is inverted in polarity and is fed to the shift register 7.

As to the combinations with zero DC component and DC components of $\pm 2$, when the conversion logic circuit 3 produces an output with a DC component of −2, if the converted combination has a DC component

4

of −2 and the evaluation of DSV variance begins with −1, the first bit thereof is inverted in level by the ex-OR circuit 11 (at this time, the output of the AND circuit 9 is at high level) and it is produced as a combination having a DC component +2. Since the output of the detecting circuit 8 is at low level and the output of the AND circuit 9 is at low level for the combination with a DC component of zero, it is directly produced without its first bit being inverted in level by the ex-OR circuit 11.

A timing detection circuit 12 detects the timing of the pulse which is supplied to the clock terminal 1 at the data bit rate, and the timing signal from the timing detection circuit 12 is supplied to a load terminal LD of the shift register 7 at every eight bits of data.

As described above, the data converted to the form of 10-bit data and latched in the shift register 7 are sequentially read out therefrom on the basis of a clock signal with frequency 5/4 times the clock frequency of the input signal and supplied thereto from a clock terminal 13. The signal thus read out is supplied to, for example, a T type flip-flop circuit 14 serving as an NRZI-coding circuit, and on the basis of the clock signal supplied from the clock terminal 13 to the clock terminal of the flip-flop circuit 14, the flip-flop circuit 14 produces at an output terminal 15 a signal which has been NRZI-coded.

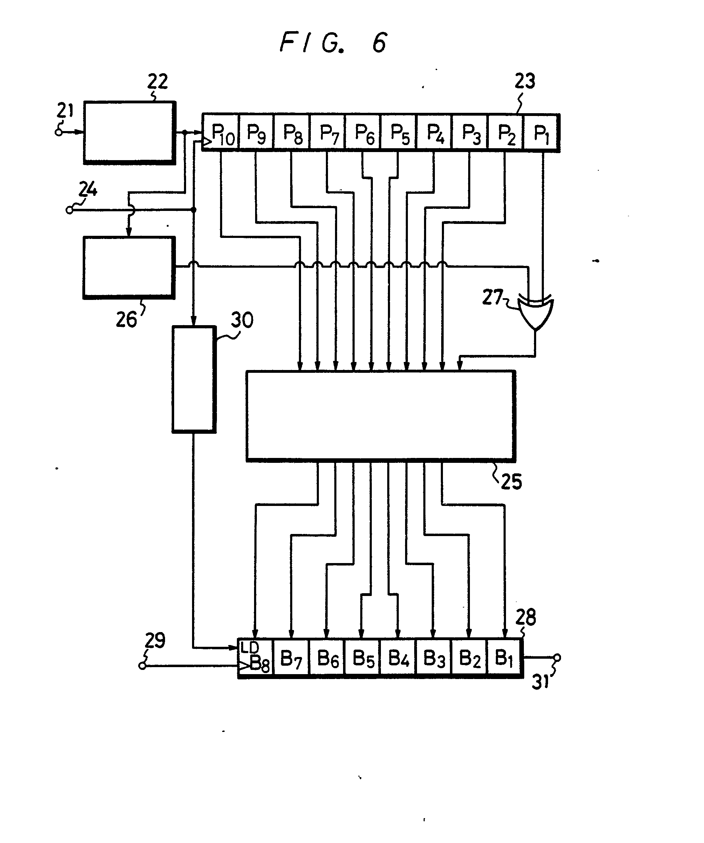

Figure 6 of the accompanying drawings schematically shows an example of an apparatus for demodulating the information which has been modulated in accordance with the above method.

A signal is supplied via an inlet terminal 21 through an NRZI demodulating circuit 22 to a 10-bit shift register 23. Information of ten bits is transferred throughout the 10-bit shift register 23 on the basis of a pulse signal of the code bit rate supplied thereto from a clock terminal 24. Information of ten bits, $P_1$ to $P_{10}$ from the shift register 23 is supplied to a conversion logic circuit 25 which uses, for example, a PLA (programmable logic array).

At the output side of the demodulating circuit 22 is a detecting circuit 26 which detects the DSV of each combination, and the output of the detecting circuit 26 is supplied to one input terminal of an ex-OR circuit 27. To the other input terminal of the ex-OR circuit 27 is supplied the first bit $P_1$ of the output from the shift register 23. In this case, the input to the conversion logic circuit 25 is unified as either a combination with a DC component zero or a combination with a DC component of ±2. Also, the detecting circuit 26 produces the high level output when the DSV up to the preceding combination is −1. Accordingly, when supplied with a combination with a DC component of ±2 from the shift register 23, the ex-OR circuit 27 inverts its first bit in level and produces the same, while when supplied with a combination with a DC component of −2 from the shift register 23, the ex-OR circuit 27 produces the first bit as it is.

In the conversion logic circuit 25, the information of ten bits, $P_1$ to $P_{10}$ is demodulated using one-to-one reverse conversion. Accordingly, the demodulated information of eight bits, $B_1$ to $B_8$, is supplied to an 8-bit shift register 28 and latched therein by a pulse supplied thereto from a clock terminal 29 each time a timing signal (a pulse of each block) which results from detecting by a timing detection circuit 30 is supplied to a load terminal LD of the shift register 28. Then, the data in the shift register 28 are shifted bit by bit on the basis of a pulse which is supplied to its clock terminal at a data bit rate and developed at an output terminal 31.

In the case of the circuit arrangement in which the PLA is used for the conversion logic circuit 3 or 25 as described above, the circuit for detecting whether the combination has a DC component of zero or ±2 is required, so the circuit arrangement becomes complicated. This poses no problem when a read-only memory (ROM) is used as the conversion logic circuit 3 or 25. However, the ROM causes the circuit arrangement to become large, and when this ROM is formed as an integrated circuit (IC), the ROM occupies a large pattern area and consumes much power.

Moreover, if a pair of combinations not limited to those in which bits succeeding the second bit are the same, but selected from those having a small DSV variance are used, then although the DSV variance can be made smaller, it is unavoidable that the circuit arrangement becomes more complex.

An 8/9 rate conversion NRZI-coding system is disclosed in our UK patent specification GB—A—2 101 854. In this system, the maximum interval $T_{max}$ between level transitions exceeds 14 bit cells, the DC component of the modulated words is as large as +4 or −9, and moreover the DSV variance is large.

According to the present invention there is provided a method of converting a basic digital signal into a converted digital signal having at least two signal levels, a DC component substantially equal to zero, and a predetermined maximum time between level transitions, the method comprising the steps of:

dividing said basic digital signal into a series of basic words, each word having m bits of data;

converting said basic digital signal into said converted digital signal by matching a converted word with each of said basic words, each of said converted words having n bits of data, wherein n is greater than m + 1, and a predetermined maximum number of consecutive digital zeros; and

generating said converted signal as a non-return to zero, inverted (NRZI)-coded digital signal;

said converted words including a plurality of primary combinations of n bits having a DC component substantially equal to zero when NRZI-coded, and a plurality of secondary combinations of n bits having a DC component with an absolute value of two when NRZI-coded, each of said primary and secondary combinations comprising two complementary combinations differing in variance of DC component when NRZI-coded;

each of said primary combinations being chosen from said two complementary combinations differing only in the first bit of data thereof, and each of said secondary combinations also being chosen from two complementary combinations differing only in the first bit of data thereof;

a control signal being generated in response to a DC component in the preceding said converted signal; and

the first bit of data next to said primary or secondary combination being inverted in response to said control signal.

According to the present invention there is also provided a converting apparatus for converting a basic digital signal into a converted digital signal having at least two signal levels, a DC component substantially equal to zero, and a predetermined maximum time between level changes, the apparatus comprising:

dividing means for dividing said basic digital signal into a series of basic words, each with m bits of data;

memory means for converting said basic digital signal into a converted digital signal by matching a converted word with each of said basic words, each of said converted words having n bits of data, wherein n is greater than m + 1, and a predetermined maximum number of consecutive digital zeroes; and

modulating means for providing said converted signal in a non-return to zero, inverted (NRZI) code;

said converted words including a plurality of primary combinations of n bits having a DC component substantially equal to zero when NRZI-coded, and a plurality of secondary combinations of n bits having a DC component with an absolute value of two when NRZI-coded;

altering means for altering a variance of the DC component of said primary combination when NRZI-coded and a polarity of said DC component of said secondary combination when NRZI-coded; and

combining means for accepting said converted words from said memory means and providing said converted words to form said converted signal;

wherein said dividing means includes a first register for supplying m bits of said basic digital signal to said memory means, said memory means provides each of said primary combinations of n bits having a DC component substantially equal to zero when NRZI-coded and said secondary combinations of n bits having a DC component with an absolute value of two when NRZI-coded, and said altering means includes detecting means for providing a control signal in response to a DC component in the preceding said converted digital signal, and inverting means for inverting the first bit of data next to said converted word, and said combining means includes a second register.

The invention will now be described by way of example with reference to the accompanying drawings, throughout which like parts are referred to by like references, and in which:

Figure 1A to 1C respectively illustrate possible 10-bit combinations of a converted digital NRZI-coded signal;

Figure 2A illustrates the 10-bit combination of a converted digital signal when NRZI-coded;

Figure 2B illustrates the 10-bit combination shown in Figure 2A with the first bit thereof inverted from a digital zero to a digital one;

Figures 3A and 3B respectively illustrate converted digital signals;

Figure 4A illustrates the 10-bit combination of a converted digital signal when NRZI-coded;

Figure 4B illustrates a variance of DSV of the 10-bit combination shown in Figure 4A;

Figure 5 schematically illustrates an apparatus for generating an n-bit NRZI-coded converted digital signal from an m-bit NRZI-coded converted digital signal;

Figure 6 schematically illustrates an apparatus for restoring a m-bit basic digital signal from the n-bit NRZI-coded converted digital signal;

Figure 7 illustrates a variance of DSV at a boundary of combinations;

Figure 8 schematically illustrates an apparatus for generating an n-bit NRZI-coded converted digital signal from an m-bit basic digital signal in accordance with one embodiment of the present invention;

Figure 9 schematically illustrates an apparatus for restoring an m-bit basic digital signal from the n-bit NRZI-coded converted digital signal which is generated in accordance with the present invention; and

Figures 10A and 10B and Figures 11A and 11B respectively illustrate an example of a synchronizing pattern and a variance of DSV thereof used in the present invention.

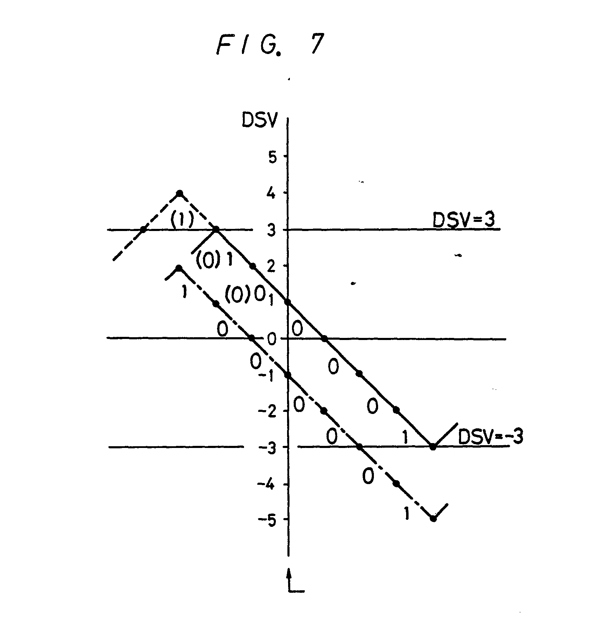

An embodiment of the invention will now be described in detail with reference to Figures 7 to 11. In this embodiment, 8-bit data is converted to 10-bit data.

When the combination in which the DC component is zero is used, the first bit thereof is converted similarly to the combination in which the DC component is $\pm 2$. To this end, when the first bit is inverted, the possible combinations need to be formed in $2 \times 2^m$ different ways, or the 8/10 conversion scheme must have $2 \times 256$ possible combinations. It is therefore assumed that $T_{max} = 5T$ ($T = T_{min} = TW$ (the window margin of the detection window)). Then, the number of the usable combinations is 512 or more.

The following Table III shows the number of possible combinations of 10-bit data which can satisfy the condition of $T_{max} = 5T$. In this case, to satisfy $T_{max} = 5T$, in NRZI code, the number of consecutive digital zeroes must never exceed four, or the same consecutive levels of digital signal after being modulated must never exceed five bits. Therefore, the bits must begin with at most two digital zeroes and also end with at most two digital zeroes.

## TABLE III

| first bit | DC | -2 | | 0 | | +2 | |
|---|---|---|---|---|---|---|---|
| | 11 •• ••• | | 51 | | 68 | | 52 |
| 1 ••• | 101 ••• | 71 | 17 | 120 | 34 | 120 | 34 |
| | 1001 ••• | | 3 | | 18 | | 34 |
| | 01 •• ••• | | 52 | | 68 | | 51 |
| 0 ••• | 001 ••• | 86 | 34 | 102 | 34 | 68 | 17 |

In Table III, with the information or word beginning "100 ...", if the first bit is inverted, it becomes "000", so that three consecutive digital zeroes are permitted at the beginning thereof. There is then a risk that four or more consecutive digital zeroes will occur at the boundary between the consecutive combinations, so such combinations cannot be used in the conversion method of this embodiment. As a result, if these 55 (3 + 18 + 34) combinations are omitted from the possible combinations in Table III, 512 combinations are left, which is just twice the number of possible combinations of $2^8 = 256$.

Accordingly, 256 possible combinations each of which forms a pair with a different first bit can be made corresponding to 256 possible combinations of 8-bit data. In this connection, Table III shows 102 possible combinations (hereinafter referred to as the primary combinations) each of which forms a pair having a DC component of zero and with a different first bit, and 154 possible combinations (hereinafter referred to as the secondary combinations) each of which forms a pair having a DC component of ±2 with a different first bit.

Upon conversion, when the pair of combinations are converted with either DSV = +1 or −1, it is selected whether the evaluation of the DSV variance becomes small. As described above in connection with Figure 4, when the DC component is −2, the evaluation of the DSV variance begins with DSV = +1, while when the DC component is +2, the evaluation of the DSV variance begins with DSV = −1.

The following Table IV shows examples of 256 possible combinations (codes) which are selected on the basis of Table III, in which they are not corresponded to the data. Table IV shows that a pair of two combinations should be selected only by controlling, for example, the first bit. In Table IV, reference Q designates the DC component information (corresponding to the preceding DSV) of the code (combination) before being converted, DV designates the variance of DSV, P designates the number of level transitions (even number is 0 and odd number 1) in each code, and Q designates the DC charge information (corresponding to the DSV of the code after just being converted) of the code just after being converted.

## TABLE IV

| No. | Q' = -1 CODE | DC | DSV | DV | P | Q | Q' = 1 CODE | DC | DSV | DV | P | Q |
|---|---|---|---|---|---|---|---|---|---|---|---|---|
| 1 | 1100100010 | 0 | 3 | 21 | 0 | -1 | 0100100010 | 0 | 3 | 21 | 1 | -1 |
| 2 | 1101110111 | 0 | 2 | 13 | 0 | -1 | 0101110111 | 0 | 2 | 13 | 1 | -1 |
| 3 | 1101110010 | 0 | 2 | 13 | 0 | -1 | 0101110010 | 0 | 2 | 13 | 1 | -1 |
| 4 | 1101010101 | 0 | 2 | 13 | 0 | -1 | 0101010101 | 0 | 2 | 13 | 1 | -1 |
| 5 | 1101011101 | 0 | 2 | 13 | 1 | 1 | 0101011101 | 0 | 2 | 13 | 0 | 1 |
| 6 | 1101011111 | 0 | 2 | 9 | 0 | -1 | 0101011111 | 0 | 2 | 9 | 1 | -1 |
| 7 | 1101011010 | 0 | 2 | 9 | 0 | -1 | 0101011010 | 0 | 2 | 9 | 1 | -1 |
| 8 | 1101001001 | 0 | 2 | 13 | 1 | 1 | 0101001001 | 0 | 2 | 13 | 0 | 1 |
| 9 | 1101001011 | 0 | 2 | 9 | 0 | -1 | 0101001011 | 0 | 2 | 9 | 1 | -1 |
| 10 | 1101001110 | 0 | 2 | 9 | 0 | -1 | 0101001110 | 0 | 2 | 9 | 1 | -1 |
| 11 | 1101000100 | 0 | 2 | 13 | 0 | -1 | 0101000100 | 0 | 2 | 13 | 1 | -1 |
| 12 | 1111011101 | 0 | 2 | 13 | 0 | -1 | 0111011101 | 0 | 2 | 13 | 1 | -1 |
| 13 | 1111010101 | 0 | 2 | 13 | 1 | 1 | 0111010101 | 0 | 2 | 13 | 0 | 1 |
| 14 | 1111010111 | 0 | 2 | 9 | 0 | -1 | 0111010111 | 0 | 2 | 9 | 1 | -1 |
| 15 | 1111010010 | 0 | 2 | 9 | 0 | -1 | 0111010010 | 0 | 2 | 9 | 1 | -1 |
| 16 | 1111110111 | 0 | 2 | 13 | 1 | 1 | 0111110111 | 0 | 2 | 13 | 0 | 1 |
| 17 | 1111110101 | 0 | 2 | 9 | 0 | -1 | 0111110101 | 0 | 2 | 9 | 1 | -1 |
| 18 | 1111111101 | 0 | 2 | 9 | 1 | 1 | 0111111101 | 0 | 2 | 9 | 0 | 1 |
| 19 | 1111111111 | 0 | 1 | 5 | 0 | -1 | 0111111111 | 0 | 1 | 5 | 1 | -1 |
| 20 | 1111111010 | 0 | 1 | 5 | 0 | -1 | 0111111010 | 0 | 1 | 5 | 1 | -1 |
| 21 | 1111101001 | 0 | 2 | 9 | 1 | 1 | 0111101001 | 0 | 2 | 9 | 0 | 1 |
| 22 | 1111101011 | 0 | 1 | 5 | 0 | -1 | 0111101011 | 0 | 1 | 5 | 1 | -1 |
| 23 | 1111101110 | 0 | 1 | 5 | 0 | -1 | 0111101110 | 0 | 1 | 5 | 1 | -1 |
| 24 | 1111100100 | 0 | 2 | 9 | 0 | -1 | 0111100100 | 0 | 2 | 9 | 1 | -1 |
| 25 | 1110100010 | 0 | 3 | 21 | 1 | 1 | 0110100010 | 0 | 3 | 21 | 0 | 1 |
| 26 | 1110100111 | 0 | 2 | 13 | 1 | 1 | 0110100111 | 0 | 2 | 13 | 0 | 1 |
| 27 | 1110100101 | 0 | 2 | 9 | 0 | -1 | 0110100101 | 0 | 2 | 9 | 1 | -1 |
| 28 | 1110101101 | 0 | 2 | 9 | 1 | 1 | 0110101101 | 0 | 2 | 9 | 0 | 1 |
| 29 | 1110101111 | 0 | 1 | 5 | 0 | -1 | 0110101111 | 0 | 1 | 5 | 1 | -1 |
| 30 | 1110101010 | 0 | 1 | 5 | 0 | -1 | 0110101010 | 0 | 1 | 5 | 1 | -1 |
| 31 | 1110111001 | 0 | 2 | 9 | 1 | 1 | 0110111001 | 0 | 2 | 9 | 0 | 1 |
| 32 | 1110111011 | 0 | 1 | 5 | 0 | -1 | 0110111011 | 0 | 1 | 5 | 1 | -1 |
| 33 | 1110111110 | 0 | 1 | 5 | 0 | -1 | 0110111110 | 0 | 1 | 5 | 1 | -1 |
| 34 | 1110110100 | 0 | 2 | 9 | 0 | -1 | 0110110100 | 0 | 2 | 9 | 1 | -1 |
| 35 | 1110010001 | 0 | 2 | 13 | 1 | 1 | 0110010001 | 0 | 2 | 13 | 0 | 1 |
| 36 | 1110010011 | 0 | 2 | 9 | 0 | -1 | 0110010011 | 0 | 2 | 9 | 1 | -1 |
| 37 | 1110010110 | 0 | 2 | 9 | 0 | -1 | 0110010110 | 0 | 2 | 9 | 1 | -1 |
| 38 | 1110011100 | 0 | 2 | 13 | 0 | -1 | 0110011100 | 0 | 2 | 13 | 1 | -1 |
| 39 | 0100011100 | 0 | 2 | 17 | 0 | -1 | 1100011100 | 0 | 2 | 17 | 1 | -1 |
| 40 | 0100010110 | 0 | 2 | 13 | 0 | -1 | 1100010110 | 0 | 2 | 13 | 1 | -1 |
| 41 | 0100010011 | 0 | 2 | 13 | 0 | -1 | 1100010011 | 0 | 2 | 13 | 1 | -1 |
| 42 | 0100010001 | 0 | 2 | 17 | 1 | 1 | 1100010001 | 0 | 2 | 17 | 0 | 1 |
| 43 | 0100110100 | 0 | 2 | 13 | 0 | -1 | 1100110100 | 0 | 2 | 13 | 1 | -1 |
| 44 | 0100111110 | 0 | 2 | 9 | 0 | -1 | 1100111110 | 0 | 2 | 9 | 1 | -1 |
| 45 | 0100111011 | 0 | 2 | 9 | 0 | -1 | 1100111011 | 0 | 2 | 9 | 1 | -1 |
| 46 | 0100111001 | 0 | 2 | 13 | 1 | 1 | 1100111001 | 0 | 2 | 13 | 0 | 1 |
| 47 | 0100101010 | 0 | 2 | 9 | 0 | -1 | 1100101010 | 0 | 2 | 9 | 1 | -1 |
| 48 | 0100101111 | 0 | 2 | 9 | 0 | -1 | 1100101111 | 0 | 2 | 9 | 1 | -1 |
| 49 | 0100101101 | 0 | 2 | 13 | 1 | 1 | 1100101101 | 0 | 2 | 13 | 0 | 1 |
| 50 | 0100100101 | 0 | 2 | 13 | 0 | -1 | 1100100101 | 0 | 2 | 13 | 1 | -1 |
| 51 | 0100100111 | 0 | 2 | 17 | 1 | 1 | 1100100111 | 0 | 2 | 17 | 0 | 1 |
| 52 | 0101100100 | 0 | 2 | 13 | 0 | -1 | 1101100100 | 0 | 2 | 13 | 1 | -1 |
| 53 | 0101101110 | 0 | 2 | 9 | 0 | -1 | 1101101110 | 0 | 2 | 9 | 1 | -1 |
| 54 | 0101101011 | 0 | 2 | 9 | 0 | -1 | 1101101011 | 0 | 2 | 9 | 1 | -1 |

TABLE IV (continued)

| | | | | | | | | | | | | |
|---|---|---|---|---|---|---|---|---|---|---|---|---|
| 55 | 0101101001 | 0 | 2 | 13 | 1 | 1 | 1101101001 | 0 | 2 | 13 | 0 | 1 |
| 56 | 0101111010 | 0 | 2 | 9 | 0 | -1 | 1101111010 | 0 | 2 | 9 | 1 | -1 |
| 57 | 0101111111 | 0 | 2 | 9 | 0 | -1 | 1101111111 | 0 | 2 | 9 | 1 | -1 |
| 58 | 0101111101 | 0 | 2 | 13 | 1 | 1 | 1101111101 | 0 | 2 | 13 | 0 | 1 |
| 59 | 0101110101 | 0 | 2 | 13 | 0 | -1 | 1101110101 | 0 | 2 | 13 | 1 | -1 |
| 60 | 0101010010 | 0 | 2 | 13 | 0 | -1 | 1101010010 | 0 | 2 | 13 | 1 | -1 |
| 61 | 0101010111 | 0 | 2 | 13 | 0 | -1 | 1101010111 | 0 | 2 | 13 | 1 | -1 |
| 62 | 0111000100 | 0 | 2 | 17 | 0 | -1 | 1111000100 | 0 | 2 | 17 | 1 | -1 |
| 63 | 0111001110 | 0 | 2 | 13 | 0 | -1 | 1111001110 | 0 | 2 | 13 | 1 | -1 |
| 64 | 0111001011 | 0 | 2 | 13 | 0 | -1 | 1111001011 | 0 | 2 | 13 | 1 | -1 |
| 65 | 0111001001 | 0 | 2 | 17 | 1 | 1 | 1111001001 | 0 | 2 | 17 | 0 | 1 |
| 66 | 0111011010 | 0 | 2 | 13 | 0 | -1 | 1111011010 | 0 | 2 | 13 | 1 | -1 |
| 67 | 0111011111 | 0 | 2 | 13 | 0 | -1 | 1111011111 | 0 | 2 | 13 | 1 | -1 |
| 68 | 0111110010 | 0 | 2 | 17 | 0 | -1 | 1111110010 | 0 | 2 | 17 | 1 | -1 |
| 69 | 1010001001 | 0 | 3 | 21 | 0 | -1 | 0010001001 | 0 | 3 | 21 | 1 | -1 |
| 70 | 1010011111 | 0 | 2 | 17 | 1 | 1 | 0010011111 | 0 | 2 | 17 | 0 | -1 |
| 71 | 1010011101 | 0 | 2 | 13 | 0 | -1 | 0010011101 | 0 | 2 | 13 | 1 | -1 |
| 72 | 1010010101 | 0 | 2 | 13 | 1 | 1 | 0010010101 | 0 | 2 | 13 | 0 | 1 |
| 73 | 1010010111 | 0 | 2 | 9 | 0 | -1 | 0010010111 | 0 | 2 | 9 | 1 | -1 |
| 74 | 1010010010 | 0 | 2 | 9 | 0 | -1 | 0010010010 | 0 | 2 | 9 | 1 | -1 |
| 75 | 1010110010 | 0 | 3 | 21 | 1 | 1 | 0010110010 | 0 | 3 | 21 | 0 | 1 |
| 76 | 1010110111 | 0 | 2 | 13 | 1 | 1 | 0010110111 | 0 | 2 | 13 | 0 | 1 |
| 77 | 1010110101 | 0 | 2 | 9 | 0 | -1 | 0010110101 | 0 | 2 | 9 | 1 | -1 |
| 78 | 1010111101 | 0 | 2 | 9 | 1 | 1 | 0010111101 | 0 | 2 | 9 | 0 | 1 |
| 79 | 1010111111 | 0 | 1 | 5 | 0 | -1 | 0010111111 | 0 | 1 | 5 | 1 | -1 |
| 80 | 1010111010 | 0 | 1 | 5 | 0 | -1 | 0010111010 | 0 | 1 | 5 | 1 | -1 |
| 81 | 1010101001 | 0 | 2 | 9 | 1 | 1 | 0010101001 | 0 | 2 | 9 | 0 | 1 |
| 82 | 1010101011 | 0 | 1 | 5 | 0 | -1 | 0010101011 | 0 | 1 | 5 | 1 | -1 |
| 83 | 1010101110 | 0 | 1 | 5 | 0 | -1 | 0010101110 | 0 | 1 | 5 | 1 | -1 |
| 84 | 1010100100 | 0 | 2 | 9 | 0 | -1 | 0010100100 | 0 | 2 | 9 | 1 | -1 |
| 85 | 1011100010 | 0 | 3 | 21 | 1 | 1 | 0011100010 | 0 | 3 | 21 | 0 | 1 |
| 86 | 1011100111 | 0 | 2 | 13 | 1 | 1 | 0011100111 | 0 | 2 | 13 | 0 | 1 |
| 87 | 1011100101 | 0 | 2 | 9 | 0 | -1 | 0011100101 | 0 | 2 | 9 | 1 | -1 |
| 88 | 1011101101 | 0 | 2 | 9 | 1 | 1 | 0011101101 | 0 | 2 | 9 | 0 | 1 |
| 89 | 1011101111 | 0 | 1 | 5 | 0 | -1 | 0011101111 | 0 | 1 | 5 | 1 | -1 |
| 90 | 1011101010 | 0 | 1 | 5 | 0 | -1 | 0011101010 | 0 | 1 | 5 | 1 | -1 |
| 91 | 1011111001 | 0 | 2 | 9 | 1 | 1 | 0011111001 | 0 | 2 | 9 | 0 | 1 |
| 92 | 1011111011 | 0 | 1 | 5 | 0 | -1 | 0011111011 | 0 | 1 | 5 | 1 | -1 |
| 93 | 1011111110 | 0 | 1 | 5 | 0 | -1 | 0011111110 | 0 | 1 | 5 | 1 | -1 |
| 94 | 1011110100 | 0 | 2 | 9 | 0 | -1 | 0011110100 | 0 | 2 | 9 | 1 | -1 |
| 95 | 1011010001 | 0 | 2 | 13 | 1 | 1 | 0011010001 | 0 | 2 | 13 | 0 | 1 |
| 96 | 1011010011 | 0 | 2 | 9 | 0 | -1 | 0011010011 | 0 | 2 | 9 | 1 | -1 |
| 97 | 1011010110 | 0 | 2 | 9 | 0 | -1 | 0011010110 | 0 | 2 | 9 | 1 | -1 |
| 98 | 1011011100 | 0 | 2 | 13 | 0 | -1 | 0011011100 | 0 | 2 | 13 | 1 | -1 |
| 99 | 0010000100 | 0 | 3 | 25 | 0 | -1 | 1010000100 | 0 | 3 | 25 | 1 | -1 |
| 100 | 0010001110 | 0 | 3 | 21 | 0 | -1 | 1010001110 | 0 | 3 | 21 | 1 | -1 |
| 101 | 0010001011 | 0 | 3 | 21 | 0 | -1 | 1010001011 | 0 | 3 | 21 | 1 | -1 |
| 102 | 0010011010 | 0 | 3 | 21 | 0 | -1 | 1010011010 | 0 | 3 | 21 | 1 | -1 |
| 103 | 1100101100 | 2 | 3 | 25 | 1 | -1 | 0100101100 | -2 | 3 | 25 | 0 | -1 |
| 104 | 1100100110 | 2 | 3 | 21 | 1 | -1 | 0100100110 | -2 | 3 | 21 | 0 | -1 |
| 105 | 1100100011 | 2 | 3 | 21 | 1 | -1 | 0100100011 | -2 | 3 | 21 | 0 | -1 |
| 106 | 1100100001 | 2 | 3 | 25 | 0 | 1 | 0100100001 | -2 | 3 | 25 | 1 | 1 |
| 107 | 1101111100 | 2 | 2 | 17 | 1 | -1 | 0101111100 | -2 | 2 | 17 | 0 | -1 |
| 108 | 1101110110 | 2 | 2 | 13 | 1 | -1 | 0101110110 | -2 | 2 | 13 | 0 | -1 |
| 109 | 1101110011 | 2 | 2 | 13 | 1 | -1 | 0101110011 | -2 | 2 | 13 | 0 | -1 |
| 110 | 1101110001 | 2 | 2 | 17 | 0 | 1 | 0101110001 | -2 | 2 | 17 | 1 | 1 |
| 111 | 1101010100 | 2 | 2 | 13 | 1 | -1 | 0101010100 | -2 | 2 | 13 | 0 | -1 |
| 112 | 1101011110 | 2 | 2 | 9 | 1 | -1 | 0101011110 | -2 | 2 | 9 | 0 | -1 |
| 113 | 1101011011 | 2 | 2 | 9 | 1 | -1 | 0101011011 | -2 | 2 | 9 | 0 | -1 |

TABLE IV (continued)

| | | | | | | | | | | | | |
|---|---|---|---|---|---|---|---|---|---|---|---|---|
| 114 | 1101011001 | 2 | 2 | 13 | 0 | 1 | 0101011001 | -2 | 2 | 13 | 1 | 1 |
| 115 | 1101001010 | 2 | 2 | 9 | 1 | -1 | 0101001010 | -2 | 2 | 9 | 0 | -1 |
| 116 | 1101001111 | 2 | 2 | 9 | 1 | -1 | 0101001111 | -2 | 2 | 9 | 0 | -1 |
| 117 | 1101001101 | 2 | 2 | 13 | 0 | 1 | 0101001101 | -2 | 2 | 13 | 1 | 1 |
| 118 | 1101000101 | 2 | 2 | 13 | 1 | -1 | 0101000101 | -2 | 2 | 13 | 0 | -1 |
| 119 | 1101000111 | 2 | 2 | 17 | 0 | 1 | 0101000111 | -2 | 2 | 17 | 1 | 1 |
| 120 | 1101000010 | 2 | 3 | 25 | 0 | 1 | 0101000010 | -2 | 3 | 25 | 1 | 1 |
| 121 | 1111011100 | 2 | 2 | 13 | 1 | -1 | 0111011100 | -2 | 2 | 13 | 0 | -1 |
| 122 | 1111010110 | 2 | 2 | 9 | 1 | -1 | 0111010110 | -2 | 2 | 9 | 0 | -1 |
| 123 | 1111010011 | 2 | 2 | 9 | 1 | -1 | 0111010011 | -2 | 2 | 9 | 0 | -1 |
| 124 | 1111010001 | 2 | 2 | 13 | 0 | 1 | 0111010001 | -2 | 2 | 13 | 1 | 1 |
| 125 | 1111110100 | 2 | 2 | 9 | 1 | -1 | 0111110100 | -2 | 2 | 9 | 0 | -1 |
| 126 | 1111111110 | 2 | 1 | 5 | 1 | -1 | 0111111110 | -2 | 1 | 5 | 0 | -1 |
| 127 | 1111111011 | 2 | 1 | 5 | 1 | -1 | 0111111011 | -2 | 1 | 5 | 0 | -1 |
| 128 | 1111111001 | 2 | 2 | 9 | 0 | 1 | 0111111001 | -2 | 2 | 9 | 1 | 1 |
| 129 | 1111101010 | 2 | 1 | 5 | 1 | -1 | 0111101010 | -2 | 1 | 5 | 0 | -1 |
| 130 | 1111101111 | 2 | 1 | 5 | 1 | -1 | 0111101111 | -2 | 1 | 5 | 0 | -1 |
| 131 | 1111101101 | 2 | 2 | 9 | 0 | 1 | 0111101101 | -2 | 2 | 9 | 1 | 1 |
| 132 | 1111100101 | 2 | 2 | 9 | 1 | -1 | 0111100101 | -2 | 2 | 9 | 0 | -1 |
| 133 | 1111100111 | 2 | 2 | 13 | 0 | 1 | 0111100111 | -2 | 2 | 13 | 1 | 1 |
| 134 | 1111100010 | 2 | 3 | 21 | 0 | 1 | 0111100010 | -2 | 3 | 21 | 1 | 1 |
| 135 | 1110100100 | 2 | 2 | 9 | 1 | -1 | 0110100100 | -2 | 2 | 9 | 0 | -1 |
| 136 | 1110101110 | 2 | 1 | 5 | 1 | -1 | 0110101110 | -2 | 1 | 5 | 0 | -1 |
| 137 | 1110101011 | 2 | 1 | 5 | 1 | -1 | 0110101011 | -2 | 1 | 5 | 0 | -1 |
| 138 | 1110101001 | 2 | 2 | 9 | 0 | 1 | 0110101001 | -2 | 2 | 9 | 1 | 1 |
| 139 | 1110111010 | 2 | 1 | 5 | 1 | -1 | 0110111010 | -2 | 1 | 5 | 0 | -1 |
| 140 | 1110111111 | 2 | 1 | 5 | 1 | -1 | 0110111111 | -2 | 1 | 5 | 0 | -1 |
| 141 | 1110111101 | 2 | 2 | 9 | 0 | 1 | 0110111101 | -2 | 2 | 9 | 1 | 1 |
| 142 | 1110110101 | 2 | 2 | 9 | 1 | -1 | 0110110101 | -2 | 2 | 9 | 0 | -1 |
| 143 | 1110110111 | 2 | 2 | 13 | 0 | 1 | 0110110111 | -2 | 2 | 13 | 1 | 1 |
| 144 | 1110110010 | 2 | 3 | 21 | 0 | 1 | 0110110010 | -2 | 3 | 21 | 1 | 1 |
| 145 | 1110010010 | 2 | 2 | 9 | 1 | -1 | 0110010010 | -2 | 2 | 9 | 0 | -1 |
| 146 | 1110010111 | 2 | 2 | 9 | 1 | -1 | 0110010111 | -2 | 2 | 9 | 0 | -1 |
| 147 | 1110010101 | 2 | 2 | 13 | 0 | 1 | 0110010101 | -2 | 2 | 13 | 1 | 1 |
| 148 | 1110011101 | 2 | 2 | 13 | 1 | -1 | 0110011101 | -2 | 2 | 13 | 0 | -1 |
| 149 | 1110011111 | 2 | 2 | 17 | 0 | 1 | 0110011111 | -2 | 2 | 17 | 1 | 1 |
| 150 | 1110011010 | 2 | 3 | 25 | 0 | 1 | 0110011010 | -2 | 3 | 25 | 1 | 1 |
| 151 | 1110001001 | 2 | 3 | 21 | 1 | -1 | 0110001001 | -2 | 3 | 21 | 0 | -1 |
| 152 | 1110001011 | 2 | 3 | 25 | 0 | 1 | 0110001011 | -2 | 3 | 25 | 1 | 1 |
| 153 | 1110001110 | 2 | 3 | 33 | 0 | 1 | 0110001110 | -2 | 3 | 33 | 1 | 1 |
| 154 | 1110000100 | 2 | 4 | 45 | 0 | 1 | 0110000100 | -2 | 4 | 45 | 1 | 1 |
| 155 | 1010011100 | 2 | 2 | 13 | 1 | -1 | 0010011100 | -2 | 2 | 13 | 0 | -1 |
| 156 | 1010010110 | 2 | 2 | 9 | 1 | -1 | 0010010110 | -2 | 2 | 9 | 0 | -1 |
| 157 | 1010010011 | 2 | 2 | 9 | 1 | -1 | 0010010011 | -2 | 2 | 9 | 0 | -1 |
| 158 | 1010010001 | 2 | 2 | 13 | 0 | 1 | 0010010001 | -2 | 2 | 13 | 1 | 1 |
| 159 | 1010110100 | 2 | 2 | 9 | 1 | -1 | 0010110100 | -2 | 2 | 9 | 0 | -1 |
| 160 | 1010111110 | 2 | 1 | 5 | 1 | -1 | 0010111110 | -2 | 1 | 5 | 0 | -1 |
| 161 | 1010111011 | 2 | 1 | 5 | 1 | -1 | 0010111011 | -2 | 1 | 5 | 0 | -1 |
| 162 | 1010111001 | 2 | 2 | 9 | 0 | 1 | 0010111001 | -2 | 2 | 9 | 1 | 1 |
| 163 | 1010101010 | 2 | 1 | 5 | 1 | -1 | 0010101010 | -2 | 1 | 5 | 0 | -1 |
| 164 | 1010101111 | 2 | 1 | 5 | 1 | -1 | 0010101111 | -2 | 1 | 5 | 0 | -1 |
| 165 | 1010101101 | 2 | 2 | 9 | 0 | 1 | 0010101101 | -2 | 2 | 9 | 1 | 1 |
| 166 | 1010100101 | 2 | 2 | 9 | 1 | -1 | 0010100101 | -2 | 2 | 9 | 0 | -1 |
| 167 | 1010100111 | 2 | 2 | 13 | 0 | 1 | 0010100111 | -2 | 2 | 13 | 1 | 1 |
| 168 | 1010100010 | 2 | 3 | 21 | 0 | 1 | 0010100010 | -2 | 3 | 21 | 1 | 1 |
| 169 | 1011100100 | 2 | 2 | 9 | 1 | -1 | 0011100100 | -2 | 2 | 9 | 0 | -1 |
| 170 | 1011101110 | 2 | 1 | 5 | 1 | -1 | 0011101110 | -2 | 1 | 5 | 0 | -1 |
| 171 | 1011101011 | 2 | 1 | 5 | 1 | -1 | 0011101011 | -2 | 1 | 5 | 0 | -1 |
| 172 | 1011101001 | 2 | 2 | 9 | 0 | 1 | 0011101001 | -2 | 2 | 9 | 1 | 1 |

TABLE IV (continued)

| | | | | | | | | | | | |
|---|---|---|---|---|---|---|---|---|---|---|---|
| 173 | 1011111010 | 2 | 1 | 5 | 1 | -1 | 0011111010 | -2 | 1 | 5 | 0 | -1 |
| 174 | 1011111111 | 2 | 1 | 5 | 1 | -1 | 0011111111 | -2 | 1 | 5 | 0 | -1 |
| 175 | 1011111101 | 2 | 2 | 9 | 0 | 1 | 0011111101 | -2 | 2 | 9 | 1 | 1 |
| 176 | 1011110101 | 2 | 2 | 9 | 1 | -1 | 0011110101 | -2 | 2 | 9 | 0 | -1 |
| 177 | 1011110111 | 2 | 2 | 13 | 0 | 1 | 0011110111 | -2 | 2 | 13 | 1 | 1 |
| 178 | 1011110010 | 2 | 3 | 21 | 0 | 1 | 0011110010 | -2 | 3 | 21 | 1 | 1 |
| 179 | 1011010010 | 2 | 2 | 9 | 1 | -1 | 0011010010 | -2 | 2 | 9 | 0 | -1 |
| 180 | 1011010111 | 2 | 2 | 9 | 1 | -1 | 0011010111 | -2 | 2 | 9 | 0 | -1 |
| 181 | 1011010101 | 2 | 2 | 13 | 0 | 1 | 0011010101 | -2 | 2 | 13 | 1 | 1 |
| 182 | 1011011101 | 2 | 2 | 13 | 1 | -1 | 0011011101 | -2 | 2 | 13 | 0 | -1 |
| 183 | 1011011111 | 2 | 2 | 17 | 0 | 1 | 0011011111 | -2 | 2 | 17 | 1 | 1 |
| 184 | 1011011010 | 2 | 3 | 25 | 0 | 1 | 0011011010 | -2 | 3 | 25 | 0 | 1 |
| 185 | 1011001001 | 2 | 3 | 21 | 1 | -1 | 0011001001 | -2 | 3 | 21 | 0 | -1 |
| 186 | 1011001011 | 2 | 3 | 25 | 0 | 1 | 0011001011 | -2 | 3 | 25 | 1 | 1 |
| 187 | 1011001110 | 2 | 3 | 33 | 0 | 1 | 0011001110 | -2 | 3 | 33 | 1 | 1 |
| 188 | 1011000100 | 2 | 4 | 45 | 0 | 1 | 0011000100 | -2 | 4 | 45 | 1 | 1 |
| 189 | 0100001110 | 2 | 3 | 37 | 0 | 1 | 1100001110 | -2 | 3 | 37 | 1 | 1 |
| 190 | 0100001011 | 2 | 3 | 29 | 0 | 1 | 1100001011 | -2 | 3 | 29 | 1 | 1 |
| 191 | 0100001001 | 2 | 3 | 25 | 1 | -1 | 1100001001 | -2 | 3 | 25 | 0 | -1 |
| 192 | 0100011010 | 2 | 3 | 29 | 0 | 1 | 1100011010 | -2 | 3 | 29 | 1 | 1 |
| 193 | 0100011111 | 2 | 2 | 21 | 0 | 1 | 1100011111 | -2 | 2 | 21 | 1 | 1 |
| 194 | 0100011101 | 2 | 2 | 17 | 1 | -1 | 1100011101 | -2 | 2 | 17 | 0 | -1 |
| 195 | 0100010101 | 2 | 2 | 17 | 0 | 1 | 1100010101 | -2 | 2 | 17 | 1 | 1 |
| 196 | 0100010111 | 2 | 2 | 13 | 1 | -1 | 1100010111 | -2 | 2 | 13 | 0 | -1 |
| 197 | 0100010010 | 2 | 2 | 13 | 1 | -1 | 1100010010 | -2 | 2 | 13 | 0 | -1 |
| 198 | 0100110010 | 2 | 3 | 25 | 0 | 1 | 1100110010 | -2 | 3 | 25 | 1 | 1 |
| 199 | 0100110111 | 2 | 2 | 17 | 0 | 1 | 1100110111 | -2 | 2 | 17 | 1 | 1 |
| 200 | 0100110101 | 2 | 2 | 13 | 1 | -1 | 1100110101 | -2 | 2 | 13 | 0 | -1 |
| 201 | 0100111101 | 2 | 2 | 13 | 0 | 1 | 1100111101 | -2 | 2 | 13 | 1 | 1 |
| 202 | 0100111111 | 2 | 2 | 9 | 1 | -1 | 1100111111 | -2 | 2 | 9 | 0 | -1 |
| 203 | 0100111010 | 2 | 2 | 9 | 1 | -1 | 1100111010 | -2 | 2 | 9 | 0 | -1 |
| 204 | 0100101001 | 2 | 2 | 13 | 0 | 1 | 1100101001 | -2 | 2 | 13 | 1 | 1 |
| 205 | 0100101011 | 2 | 2 | 9 | 1 | -1 | 1100101011 | -2 | 2 | 9 | 0 | -1 |
| 206 | 0100101110 | 2 | 2 | 9 | 1 | -1 | 1100101110 | -2 | 2 | 9 | 0 | -1 |
| 207 | 0100100100 | 2 | 2 | 13 | 1 | -1 | 1100100100 | -2 | 2 | 13 | 0 | -1 |
| 208 | 0101100010 | 2 | 3 | 25 | 0 | 1 | 1101100010 | -2 | 3 | 25 | 1 | 1 |
| 209 | 0101100111 | 2 | 2 | 17 | 0 | 1 | 1101100111 | -2 | 2 | 17 | 1 | 1 |
| 210 | 0101100101 | 2 | 2 | 13 | 1 | -1 | 1101100101 | -2 | 2 | 13 | 0 | -1 |
| 211 | 0101101101 | 2 | 2 | 13 | 0 | 1 | 1101101101 | -2 | 2 | 13 | 1 | 1 |
| 212 | 0101101111 | 2 | 2 | 9 | 1 | -1 | 1101101111 | -2 | 2 | 9 | 0 | -1 |
| 213 | 0101101010 | 2 | 2 | 9 | 1 | -1 | 1101101010 | -2 | 2 | 9 | 0 | -1 |
| 214 | 0101111001 | 2 | 2 | 13 | 0 | 1 | 1101111001 | -2 | 2 | 13 | 1 | 1 |
| 215 | 0101111011 | 2 | 2 | 9 | 1 | -1 | 1101111011 | -2 | 2 | 9 | 0 | -1 |
| 216 | 0101111110 | 2 | 2 | 9 | 1 | -1 | 1101111110 | -2 | 2 | 9 | 0 | -1 |
| 217 | 0101110100 | 2 | 2 | 13 | 1 | -1 | 1101110100 | -2 | 2 | 13 | 0 | -1 |
| 218 | 0101010001 | 2 | 2 | 17 | 0 | 1 | 1101010001 | -2 | 2 | 17 | 1 | 1 |
| 219 | 0101010011 | 2 | 2 | 13 | 1 | -1 | 1101010011 | -2 | 2 | 13 | 0 | -1 |
| 220 | 0101010110 | 2 | 2 | 13 | 1 | -1 | 1101010110 | -2 | 2 | 13 | 0 | -1 |
| 221 | 0101011100 | 2 | 2 | 17 | 1 | -1 | 1101011100 | -2 | 2 | 17 | 0 | -1 |
| 222 | 0111000010 | 2 | 3 | 29 | 0 | 1 | 1111000010 | -2 | 3 | 29 | 1 | 1 |
| 223 | 0111000111 | 2 | 2 | 21 | 0 | 1 | 1111000111 | -2 | 2 | 21 | 1 | 1 |
| 224 | 0111000101 | 2 | 2 | 17 | 1 | -1 | 1111000101 | -2 | 2 | 17 | 0 | -1 |
| 225 | 0111001101 | 2 | 2 | 17 | 0 | 1 | 1111001101 | -2 | 2 | 17 | 1 | 1 |
| 226 | 0111001111 | 2 | 2 | 13 | 1 | -1 | 1111001111 | -2 | 2 | 13 | 0 | -1 |
| 227 | 0111001010 | 2 | 2 | 13 | 1 | -1 | 1111001010 | -2 | 2 | 13 | 0 | -1 |
| 228 | 0111011001 | 2 | 2 | 17 | 0 | 1 | 1111011001 | -2 | 2 | 17 | 1 | 1 |
| 229 | 0111011011 | 2 | 2 | 13 | 1 | -1 | 1111011011 | -2 | 2 | 13 | 0 | -1 |
| 230 | 0111011110 | 2 | 2 | 13 | 1 | -1 | 1111011110 | -2 | 2 | 13 | 0 | -1 |
| 231 | 0111010100 | 2 | 2 | 17 | 1 | -1 | 1111010100 | -2 | 2 | 17 | 0 | -1 |

TABLE IV (continued)

| No. | code | | | | | | code | | | | | |
|-----|------------|---|---|----|---|----|------------|-----|---|----|---|----|
| 232 | 0111110001 | 2 | 2 | 21 | 0 | 1  | 1111110001 | -2 | 2 | 21 | 1 | 1  |
| 233 | 0111110011 | 2 | 2 | 17 | 1 | -1 | 1111110011 | -2 | 2 | 17 | 0 | -1 |
| 234 | 0111110110 | 2 | 2 | 17 | 1 | -1 | 1111110110 | -2 | 2 | 17 | 0 | -1 |
| 235 | 0111111100 | 2 | 2 | 21 | 1 | -1 | 1111111100 | -2 | 2 | 21 | 0 | -1 |
| 236 | 0110100001 | 2 | 3 | 29 | 0 | 1  | 1110100001 | -2 | 3 | 29 | 1 | 1  |
| 237 | 0110100011 | 2 | 3 | 25 | 1 | -1 | 1110100011 | -2 | 3 | 25 | 0 | -1 |
| 238 | 0110100110 | 2 | 3 | 25 | 1 | -1 | 1110100110 | -2 | 3 | 25 | 0 | -1 |
| 239 | 0110101100 | 2 | 3 | 29 | 1 | -1 | 1110101100 | -2 | 3 | 29 | 0 | -1 |
| 240 | 0010000111 | 2 | 3 | 29 | 0 | 1  | 1010000111 | -2 | 3 | 29 | 1 | 1  |
| 241 | 0010000101 | 2 | 3 | 25 | 1 | -1 | 1010000101 | -2 | 3 | 25 | 0 | -1 |
| 242 | 0010001101 | 2 | 3 | 25 | 0 | 1  | 1010001101 | -2 | 3 | 25 | 1 | 1  |
| 243 | 0010001111 | 2 | 3 | 21 | 1 | -1 | 1010001111 | -2 | 3 | 21 | 0 | -1 |
| 244 | 0010001010 | 2 | 3 | 21 | 1 | -1 | 1010001010 | -2 | 3 | 21 | 0 | -1 |
| 245 | 0010011001 | 2 | 3 | 25 | 0 | 1  | 1010011001 | -2 | 3 | 25 | 1 | 1  |
| 246 | 0010011011 | 2 | 3 | 21 | 1 | -1 | 1010011011 | -2 | 3 | 21 | 0 | -1 |
| 247 | 0010011110 | 2 | 3 | 21 | 1 | -1 | 1010011110 | -2 | 3 | 21 | 0 | -1 |
| 248 | 0010010100 | 2 | 3 | 25 | 1 | -1 | 1010010100 | -2 | 3 | 25 | 0 | -1 |
| 249 | 0010110001 | 2 | 3 | 29 | 0 | 1  | 1010110001 | -2 | 3 | 29 | 1 | 1  |
| 250 | 0010110011 | 2 | 3 | 25 | 1 | -1 | 1010110011 | -2 | 3 | 25 | 0 | -1 |
| 251 | 0010110110 | 2 | 3 | 25 | 1 | -1 | 1010110110 | -2 | 3 | 25 | 0 | -1 |
| 252 | 0010111100 | 2 | 3 | 29 | 1 | -1 | 1010111100 | -2 | 3 | 29 | 0 | -1 |
| 253 | 0011100001 | 2 | 3 | 37 | 0 | 1  | 1011100001 | -2 | 3 | 37 | 1 | 1  |
| 254 | 0011100011 | 2 | 3 | 33 | 1 | -1 | 1011100011 | -2 | 3 | 33 | 0 | -1 |
| 255 | 0011100110 | 2 | 3 | 33 | 1 | -1 | 1011100110 | -2 | 3 | 33 | 0 | -1 |
| 256 | 0011101100 | 2 | 3 | 37 | 1 | -1 | 1011101100 | -2 | 3 | 37 | 0 | -1 |

An example in which DSV variance is small and a selection range of the combinations is wide will now be described.

In Table IV, when the distribution of the magnitude (DSV) of the DSV is considered, almost all of (DSV) lies within a range of (DSV) is less than or equal to 3, only the codes Nos. 154 and 188 having (DSV) = 4. Accordingly, in the selection method based on Table III, the absolute value of the DSV can be maximized to four.

As a result, if the absolute value of the DS can be maximized to three, of 256 possible combinations in Table IV, two combinations corresponding to the above codes of Nos. 154 and 188 cannot be used, with the result that in accordance with the selection method based on Table III, only 254 combinations are possible.

However, if (DSV) is less than or equal to 3 is satisfied, a combination beginning with "0001 . . .", and a combination with three consecutive digital zeros which cannot be used in the selection method based on Table III become possible. Because, ". . . 100" never appears at the end of the combination which carries DSV = +1 to the next combination, so that only when the evaluation of the DSV variance begins with DSV = +1, it becomes possible to use a combination which begins with "0001 . . .".

This will be further described with reference to Figure 7. If, now, the next combination begins with "0001 . . ." and the evaluation of the DSV variance thereof begins with DSV = +1, as shown by a solid line in Figure 7, the preceding combination ends with ". . . 10" because of the condition, (DSV) is less than or equal to 3. In this connection, if the condition, (DSV) is less than or equal to 4 is satisfied, as shown by a broken line in Figure 7, the preceding combination ends with ". . . 100" and five consecutive digital zeroes appear at the boundary between the preceding and succeeding combinations. This does not satisfy the condition $T_{max} = 5T'$.

If the next combination begins with "0001 . . ." and the evaluation of the DSV variance begins with DSV = -1, as shown by a one-dot chain line in Figure 7, the portion of the preceding combination beginning with "100 . . ." lies within a range of (DSV) is less than or equal to 3, but the portion of the succeeding combination beginning with "0001 . . ." exceeds the range of DSV = -4. In addition, five consecutive digital zeroes appear at the boundary between the preceding and succeeding combinations, which then cannot satisfy the condition of $T_{max} = 5T'$.

Accordingly, if a combination is made so as to satisfy the condition of (DSV) is less than or equal to 3, when the evaluation of the DSV variance thereof begins with DSV = +1, it becomes possible to use a combination beginning with "0001 . . ." as the succeeding combination (that is, a combination with a DC component of zero or -2).

The number of possible combinations for 10-bit data which can be selected in this case is shown in the following Table V.

TABLE V

| first bit | DC | | −2 | | 0 | | +2 | |
|---|---|---|---|---|---|---|---|---|
| 1 | 11 •• ••• | | 71 | 51 | 116 | 68 | 103 | 51 |
| | 101 ••• | | | 17 | | 34 | | 33 |
| | 1001 ••• | | | 3 | | 14 | | 19 |
| 0 | 01 •• ••• | | 103 | 51 | 116 | 68 | 71 | 51 |
| | 001 ••• | | | 33 | | 34 | | 17 |
| | 0001 ••• | | | 19 | | 14 | | 3 |

In Table V three combinations having a DC component of +2 and beginning with "0001 ..." cannot be used by this selection method, because a combination with a DC component of +2 is used at DSV = −1. Consequently it is not possible to use three combinations with a DC component of −2 and beginning with "1001 ..." which form a pair with the former. Therefore, except the above conditions, it becomes possible to use a pair of 278 combinations (a pair of 116 combinations with a DC component of zero and a pair of 171 combinations with a DC component of ±2.

Table VI shows examples of 278 different combinations (codes) selected on the basis of Table V. These combinations are not made corresponding to data. In Table VI, a pair of combinations are selected only by controlling the level of the first bit, similarly to Table IV. In Table VI, references such as Q are used for the same purpose as in Table VI.

## TABLE VI

| No. | Q' = -1 CODE | DC | DSV | DV | P | Q | Q' = 1 CODE | DC | DSV | DV | P | Q |
|---|---|---|---|---|---|---|---|---|---|---|---|---|
| 1 | 1100100010 | 0 | 3 | 21 | 0 | -1 | 0100100010 | 0 | 3 | 21 | 1 | -1 |
| 2 | 1101110111 | 0 | 2 | 13 | 0 | -1 | 0101110111 | 0 | 2 | 13 | 1 | -1 |
| 3 | 1101110010 | 0 | 2 | 13 | 0 | -1 | 0101110010 | 0 | 2 | 13 | 1 | -1 |
| 4 | 1101010101 | 0 | 2 | 13 | 0 | -1 | 0101010101 | 0 | 2 | 13 | 1 | -1 |
| 5 | 1101011101 | 0 | 2 | 13 | 1 | 1 | 0101011101 | 0 | 2 | 13 | 0 | 1 |
| 6 | 1101011111 | 0 | 2 | 9 | 0 | -1 | 0101011111 | 0 | 2 | 9 | 1 | -1 |
| 7 | 1101011010 | 0 | 2 | 9 | 0 | -1 | 0101011010 | 0 | 2 | 9 | 1 | -1 |
| 8 | 1101001001 | 0 | 2 | 13 | 1 | 1 | 0101001001 | 0 | 2 | 13 | 0 | 1 |
| 9 | 1101001011 | 0 | 2 | 9 | 0 | -1 | 0101001011 | 0 | 2 | 9 | 1 | -1 |
| 10 | 1101001110 | 0 | 2 | 9 | 0 | -1 | 0101001110 | 0 | 2 | 9 | 1 | -1 |
| 11 | 1101000100 | 0 | 2 | 13 | 0 | -1 | 0101000100 | 0 | 2 | 13 | 1 | -1 |
| 12 | 1111011101 | 0 | 2 | 13 | 0 | -1 | 0111011101 | 0 | 2 | 13 | 1 | -1 |
| 13 | 1111010101 | 0 | 2 | 13 | 1 | 1 | 0111010101 | 0 | 2 | 13 | 0 | 1 |
| 14 | 1111010111 | 0 | 2 | 9 | 0 | -1 | 0111010111 | 0 | 2 | 9 | 1 | -1 |
| 15 | 1111010010 | 0 | 2 | 9 | 0 | -1 | 0111010010 | 0 | 2 | 9 | 1 | -1 |
| 16 | 1111110111 | 0 | 2 | 13 | 1 | 1 | 0111110111 | 0 | 2 | 13 | 0 | 1 |
| 17 | 1111110101 | 0 | 2 | 9 | 0 | -1 | 0111110101 | 0 | 2 | 9 | 1 | -1 |
| 18 | 1111111101 | 0 | 2 | 9 | 1 | 1 | 0111111101 | 0 | 2 | 9 | 0 | 1 |
| 19 | 1111111111 | 0 | 1 | 5 | 0 | -1 | 0111111111 | 0 | 1 | 5 | 1 | -1 |
| 20 | 1111111010 | 0 | 1 | 5 | 0 | -1 | 0111111010 | 0 | 1 | 5 | 1 | -1 |
| 21 | 1111101001 | 0 | 2 | 9 | 1 | 1 | 0111101001 | 0 | 2 | 9 | 0 | 1 |
| 22 | 1111101011 | 0 | 1 | 5 | 0 | -1 | 0111101011 | 0 | 1 | 5 | 1 | -1 |
| 23 | 1111101110 | 0 | 1 | 5 | 0 | -1 | 0111101110 | 0 | 1 | 5 | 1 | -1 |
| 24 | 1111100100 | 0 | 2 | 9 | 0 | -1 | 0111100100 | 0 | 2 | 9 | 1 | -1 |
| 25 | 1110100010 | 0 | 3 | 21 | 1 | 1 | 0110100010 | 0 | 3 | 21 | 0 | 1 |
| 26 | 1110100111 | 0 | 2 | 13 | 1 | 1 | 0110100111 | 0 | 2 | 13 | 0 | 1 |
| 27 | 1110100101 | 0 | 2 | 9 | 0 | -1 | 0110100101 | 0 | 2 | 9 | 1 | -1 |
| 28 | 1110101101 | 0 | 2 | 9 | 1 | 1 | 0110101101 | 0 | 2 | 9 | 0 | 1 |
| 29 | 1110101111 | 0 | 1 | 5 | 0 | -1 | 0110101111 | 0 | 1 | 5 | 1 | -1 |
| 30 | 1110101010 | 0 | 1 | 5 | 0 | -1 | 0110101010 | 0 | 1 | 5 | 1 | -1 |
| 31 | 1110111001 | 0 | 2 | 9 | 1 | 1 | 0110111001 | 0 | 2 | 9 | 0 | 1 |
| 32 | 1110111011 | 0 | 1 | 5 | 0 | -1 | 0110111011 | 0 | 1 | 5 | 1 | -1 |
| 33 | 1110111110 | 0 | 1 | 5 | 0 | -1 | 0110111110 | 0 | 1 | 5 | 1 | -1 |
| 34 | 1110110100 | 0 | 2 | 9 | 0 | -1 | 0110110100 | 0 | 2 | 9 | 1 | -1 |
| 35 | 1110010001 | 0 | 2 | 13 | 1 | 1 | 0110010001 | 0 | 2 | 13 | 0 | 1 |
| 36 | 1110010011 | 0 | 2 | 9 | 0 | -1 | 0110010011 | 0 | 2 | 9 | 1 | -1 |
| 37 | 1110010110 | 0 | 2 | 9 | 0 | -1 | 0110010110 | 0 | 2 | 9 | 1 | -1 |
| 38 | 1110011100 | 0 | 2 | 13 | 0 | -1 | 0110011100 | 0 | 2 | 13 | 1 | -1 |
| 39 | 0100011100 | 0 | 2 | 17 | 0 | -1 | 1100011100 | 0 | 2 | 17 | 1 | -1 |
| 40 | 0100010110 | 0 | 2 | 13 | 0 | -1 | 1100010110 | 0 | 2 | 13 | 1 | -1 |
| 41 | 0100010011 | 0 | 2 | 13 | 0 | -1 | 1100010011 | 0 | 2 | 13 | 1 | -1 |
| 42 | 0100010001 | 0 | 2 | 17 | 1 | 1 | 1100010001 | 0 | 2 | 17 | 0 | 1 |
| 43 | 0100110100 | 0 | 2 | 13 | 0 | -1 | 1100110100 | 0 | 2 | 13 | 1 | -1 |
| 44 | 0100111110 | 0 | 2 | 9 | 0 | -1 | 1100111110 | 0 | 2 | 9 | 1 | -1 |
| 45 | 0100111011 | 0 | 2 | 9 | 0 | -1 | 1100111011 | 0 | 2 | 9 | 1 | -1 |
| 46 | 0100111001 | 0 | 2 | 13 | 1 | 1 | 1100111001 | 0 | 2 | 13 | 0 | 1 |
| 47 | 0100101010 | 0 | 2 | 9 | 0 | -1 | 1100101010 | 0 | 2 | 9 | 1 | -1 |
| 48 | 0100101111 | 0 | 2 | 9 | 0 | -1 | 1100101111 | 0 | 2 | 9 | 1 | -1 |
| 49 | 0100101101 | 0 | 2 | 13 | 1 | 1 | 1100101101 | 0 | 2 | 13 | 0 | 1 |
| 50 | 0100100101 | 0 | 2 | 13 | 0 | -1 | 1100100101 | 0 | 2 | 13 | 1 | -1 |
| 51 | 0100100111 | 0 | 2 | 17 | 1 | 1 | 1100100111 | 0 | 2 | 17 | 0 | 1 |
| 52 | 0101100100 | 0 | 2 | 13 | 0 | -1 | 1101100100 | 0 | 2 | 13 | 1 | -1 |
| 53 | 0101101110 | 0 | 2 | 9 | 0 | -1 | 1101101110 | 0 | 2 | 9 | 1 | -1 |
| 54 | 0101101011 | 0 | 2 | 9 | 0 | -1 | 1101101011 | 0 | 2 | 9 | 1 | -1 |

TABLE VI (continued)

| | | | | | | | | | | | | |
|---|---|---|---|---|---|---|---|---|---|---|---|---|
| 55 | 0101101001 | 0 | 2 | 13 | 1 | 1 | 1101101001 | 0 | 2 | 13 | 0 | 1 |
| 56 | 0101111010 | 0 | 2 | 9 | 0 | -1 | 1101111010 | 0 | 2 | 9 | 1 | -1 |
| 57 | 0101111111 | 0 | 2 | 9 | 0 | -1 | 1101111111 | 0 | 2 | 9 | 1 | -1 |
| 58 | 0101111101 | 0 | 2 | 13 | 1 | 1 | 1101111101 | 0 | 2 | 13 | 0 | 1 |
| 59 | 0101110101 | 0 | 2 | 13 | 0 | -1 | 1101110101 | 0 | 2 | 13 | 1 | -1 |
| 60 | 0101010010 | 0 | 2 | 13 | 0 | -1 | 1101010010 | 0 | 2 | 13 | 1 | -1 |
| 61 | 0101010111 | 0 | 2 | 13 | 0 | -1 | 1101010111 | 0 | 2 | 13 | 1 | -1 |
| 62 | 0111000100 | 0 | 2 | 17 | 0 | -1 | 1111000100 | 0 | 2 | 17 | 1 | -1 |
| 63 | 0111001110 | 0 | 2 | 13 | 0 | -1 | 1111001110 | 0 | 2 | 13 | 1 | -1 |
| 64 | 0111001011 | 0 | 2 | 13 | 0 | -1 | 1111001011 | 0 | 2 | 13 | 1 | -1 |
| 65 | 0111001001 | 0 | 2 | 17 | 1 | 1 | 1111001001 | 0 | 2 | 17 | 0 | 1 |
| 66 | 0111011010 | 0 | 2 | 13 | 0 | -1 | 1111011010 | 0 | 2 | 13 | 1 | -1 |
| 67 | 0111011111 | 0 | 2 | 13 | 0 | -1 | 1111011111 | 0 | 2 | 13 | 1 | -1 |
| 68 | 0111110010 | 0 | 2 | 17 | 0 | -1 | 1111110010 | 0 | 2 | 17 | 1 | -1 |
| 69 | 1010001001 | 0 | 3 | 21 | 0 | -1 | 0010001001 | 0 | 3 | 21 | 1 | -1 |
| 70 | 1010011111 | 0 | 2 | 17 | 1 | 1 | 0010011111 | 0 | 2 | 17 | 0 | 1 |
| 71 | 1010011101 | 0 | 2 | 13 | 0 | -1 | 0010011101 | 0 | 2 | 13 | 1 | -1 |
| 72 | 1010010101 | 0 | 2 | 13 | 1 | 1 | 0010010101 | 0 | 2 | 13 | 0 | 1 |
| 73 | 1010010111 | 0 | 2 | 9 | 0 | -1 | 0010010111 | 0 | 2 | 9 | 1 | -1 |
| 74 | 1010010010 | 0 | 2 | 9 | 0 | -1 | 0010010010 | 0 | 2 | 9 | 1 | -1 |
| 75 | 1010110010 | 0 | 3 | 21 | 1 | 1 | 0010110010 | 0 | 3 | 21 | 0 | 1 |
| 76 | 1010110111 | 0 | 2 | 13 | 1 | 1 | 0010110111 | 0 | 2 | 13 | 0 | 1 |
| 77 | 1010110101 | 0 | 2 | 9 | 0 | -1 | 0010110101 | 0 | 2 | 9 | 1 | -1 |
| 78 | 1010111101 | 0 | 2 | 9 | 1 | 1 | 0010111101 | 0 | 2 | 9 | 0 | 1 |
| 79 | 1010111111 | 0 | 1 | 5 | 0 | -1 | 0010111111 | 0 | 1 | 5 | 1 | -1 |
| 80 | 1010111010 | 0 | 1 | 5 | 0 | -1 | 0010111010 | 0 | 1 | 5 | 1 | -1 |
| 81 | 1010101001 | 0 | 2 | 9 | 1 | 1 | 0010101001 | 0 | 2 | 9 | 0 | 1 |
| 82 | 1010101011 | 0 | 1 | 5 | 0 | -1 | 0010101011 | 0 | 1 | 5 | 1 | -1 |
| 83 | 1010101110 | 0 | 1 | 5 | 0 | -1 | 0010101110 | 0 | 1 | 5 | 1 | -1 |
| 84 | 1010100100 | 0 | 2 | 9 | 0 | -1 | 0010100100 | 0 | 2 | 9 | 1 | -1 |
| 85 | 1011100010 | 0 | 3 | 21 | 1 | 1 | 0011100010 | 0 | 3 | 21 | 0 | 1 |
| 86 | 1011100111 | 0 | 2 | 13 | 1 | 1 | 0011100111 | 0 | 2 | 13 | 0 | 1 |
| 87 | 1011100101 | 0 | 2 | 9 | 0 | -1 | 0011100101 | 0 | 2 | 9 | 1 | -1 |
| 88 | 1011101101 | 0 | 2 | 9 | 1 | 1 | 0011101101 | 0 | 2 | 9 | 0 | 1 |
| 89 | 1011101111 | 0 | 1 | 5 | 0 | -1 | 0011101111 | 0 | 1 | 5 | 1 | -1 |
| 90 | 1011101010 | 0 | 1 | 5 | 0 | -1 | 0011101010 | 0 | 1 | 5 | 1 | -1 |
| 91 | 1011111001 | 0 | 2 | 9 | 1 | 1 | 0011111001 | 0 | 2 | 9 | 0 | 1 |
| 92 | 1011111011 | 0 | 1 | 5 | 0 | -1 | 0011111011 | 0 | 1 | 5 | 1 | -1 |
| 93 | 1011111110 | 0 | 1 | 5 | 0 | -1 | 0011111110 | 0 | 1 | 5 | 1 | -1 |
| 94 | 1011110100 | 0 | 2 | 9 | 0 | -1 | 0011110100 | 0 | 2 | 9 | 1 | -1 |
| 95 | 1011010001 | 0 | 2 | 13 | 1 | 1 | 0011010001 | 0 | 2 | 13 | 0 | 1 |
| 96 | 1011010011 | 0 | 2 | 9 | 0 | -1 | 0011010011 | 0 | 2 | 9 | 1 | -1 |
| 97 | 1011010110 | 0 | 2 | 9 | 0 | -1 | 0011010110 | 0 | 2 | 9 | 1 | -1 |
| 98 | 1011011100 | 0 | 2 | 13 | 0 | -1 | 0011011100 | 0 | 2 | 13 | 1 | -1 |
| 99 | 0010000100 | 0 | 3 | 25 | 0 | -1 | 1010000100 | 0 | 3 | 25 | 1 | -1 |
| 100 | 0010001110 | 0 | 3 | 21 | 0 | -1 | 1010001110 | 0 | 3 | 21 | 1 | -1 |
| 101 | 0010001011 | 0 | 3 | 21 | 0 | -1 | 1010001011 | 0 | 3 | 21 | 1 | -1 |
| 102 | 0010011010 | 0 | 3 | 21 | 0 | -1 | 1010011010 | 0 | 3 | 21 | 1 | -1 |
| 103 | 1001000010 | 0 | 3 | 25 | 1 | -1 | 0001000010 | 0 | 3 | 25 | 0 | 1 |
| 104 | 1001000111 | 0 | 2 | 17 | 1 | 1 | 0001000111 | 0 | 2 | 17 | 0 | 1 |
| 105 | 1001000101 | 0 | 2 | 13 | 0 | -1 | 0001000101 | 0 | 2 | 13 | 1 | -1 |
| 106 | 1001001101 | 0 | 2 | 13 | 1 | 1 | 0001001101 | 0 | 2 | 13 | 0 | 1 |
| 107 | 1001001111 | 0 | 2 | 9 | 0 | -1 | 0001001111 | 0 | 2 | 9 | 1 | -1 |
| 108 | 1001001010 | 0 | 2 | 9 | 0 | -1 | 0001001010 | 0 | 2 | 9 | 1 | -1 |
| 109 | 1001011001 | 0 | 2 | 13 | 1 | 1 | 0001011001 | 0 | 2 | 13 | 0 | 1 |
| 110 | 1001011011 | 0 | 2 | 9 | 0 | -1 | 0001011011 | 0 | 2 | 9 | 1 | -1 |
| 111 | 1001011110 | 0 | 2 | 9 | 0 | -1 | 0001011110 | 0 | 2 | 9 | 1 | -1 |
| 112 | 1001010100 | 0 | 2 | 13 | 0 | -1 | 0001010100 | 0 | 2 | 13 | 1 | -1 |
| 113 | 1001110001 | 0 | 2 | 17 | 1 | 1 | 0001110001 | 0 | 2 | 17 | 0 | 1 |

TABLE VI (continued)

| | | | | | | | | | | | | |
|---|---|---|---|---|---|---|---|---|---|---|---|---|
| 114 | 1001110011 | 0 | 2 | 13 | 0 | -1 | 0001110011 | 0 | 2 | 13 | 1 | -1 |
| 115 | 1001110110 | 0 | 2 | 13 | 0 | -1 | 0001110110 | 0 | 2 | 13 | 1 | -1 |
| 116 | 1001111100 | 0 | 2 | 17 | 0 | -1 | 0001111100 | 0 | 2 | 17 | 1 | -1 |
| 117 | 1100101100 | 2 | 3 | 25 | 1 | -1 | 0100101100 | -2 | 3 | 25 | 0 | -1 |
| 118 | 1100100110 | 2 | 3 | 21 | 1 | -1 | 0100100110 | -2 | 3 | 21 | 0 | -1 |
| 119 | 1100100011 | 2 | 3 | 21 | 1 | -1 | 0100100011 | -2 | 3 | 21 | 0 | -1 |
| 120 | 1100100001 | 2 | 3 | 25 | 0 | 1 | 0100100001 | -2 | 3 | 25 | 1 | 1 |
| 121 | 1101111100 | 2 | 2 | 17 | 1 | -1 | 0101111100 | -2 | 2 | 17 | 0 | -1 |
| 122 | 1101110110 | 2 | 2 | 13 | 1 | -1 | 0101110110 | -2 | 2 | 13 | 0 | -1 |
| 123 | 1101110011 | 2 | 2 | 13 | 1 | -1 | 0101110011 | -2 | 2 | 13 | 0 | -1 |
| 124 | 1101110001 | 2 | 2 | 17 | 0 | 1 | 0101110001 | -2 | 2 | 17 | 1 | 1 |
| 125 | 1101010100 | 2 | 2 | 13 | 1 | -1 | 0101010100 | -2 | 2 | 13 | 0 | -1 |
| 126 | 1101011110 | 2 | 2 | 9 | 1 | -1 | 0101011110 | -2 | 2 | 9 | 0 | -1 |
| 127 | 1101011011 | 2 | 2 | 9 | 1 | -1 | 0101011011 | -2 | 2 | 9 | 0 | -1 |
| 128 | 1101011001 | 2 | 2 | 13 | 0 | 1 | 0101011001 | -2 | 2 | 13 | 1 | 1 |
| 129 | 1101001010 | 2 | 2 | 9 | 1 | -1 | 0101001010 | -2 | 2 | 9 | 0 | -1 |
| 130 | 1101001111 | 2 | 2 | 9 | 1 | -1 | 0101001111 | -2 | 2 | 9 | 0 | -1 |
| 131 | 1101001101 | 2 | 2 | 13 | 0 | 1 | 0101001101 | -2 | 2 | 13 | 1 | 1 |
| 132 | 1101000101 | 2 | 2 | 13 | 1 | -1 | 0101000101 | -2 | 2 | 13 | 0 | -1 |
| 133 | 1101000111 | 2 | 2 | 17 | 0 | 1 | 0101000111 | -2 | 2 | 17 | 1 | 1 |
| 134 | 1101000010 | 2 | 3 | 25 | 0 | 1 | 0101000010 | -2 | 3 | 25 | 1 | 1 |
| 135 | 1111011100 | 2 | 2 | 13 | 1 | -1 | 0111011100 | -2 | 2 | 13 | 0 | -1 |
| 136 | 1111010110 | 2 | 2 | 9 | 1 | -1 | 0111010110 | -2 | 2 | 9 | 0 | -1 |
| 137 | 1111010011 | 2 | 2 | 9 | 1 | -1 | 0111010011 | -2 | 2 | 9 | 0 | -1 |
| 138 | 1111010001 | 2 | 2 | 13 | 0 | 1 | 0111010001 | -2 | 2 | 13 | 1 | 1 |
| 139 | 1111110100 | 2 | 2 | 9 | 1 | -1 | 0111110100 | -2 | 2 | 9 | 0 | -1 |
| 140 | 1111111110 | 2 | 1 | 5 | 1 | -1 | 0111111110 | -2 | 1 | 5 | 0 | -1 |
| 141 | 1111111011 | 2 | 1 | 5 | 1 | -1 | 0111111011 | -2 | 1 | 5 | 0 | -1 |
| 142 | 1111111001 | 2 | 2 | 9 | 0 | 1 | 0111111001 | -2 | 2 | 9 | 1 | 1 |
| 143 | 1111101010 | 2 | 1 | 5 | 1 | -1 | 0111101010 | -2 | 1 | 5 | 0 | -1 |
| 144 | 1111101111 | 2 | 1 | 5 | 1 | -1 | 0111101111 | -2 | 1 | 5 | 0 | -1 |
| 145 | 1111101101 | 2 | 2 | 9 | 0 | 1 | 0111101101 | -2 | 2 | 9 | 1 | 1 |
| 146 | 1111100101 | 2 | 2 | 9 | 1 | -1 | 0111100101 | -2 | 2 | 9 | 0 | -1 |
| 147 | 1111100111 | 2 | 2 | 13 | 0 | 1 | 0111100111 | -2 | 2 | 13 | 1 | 1 |
| 148 | 1111100010 | 2 | 3 | 21 | 0 | 1 | 0111100010 | -2 | 3 | 21 | 1 | 1 |
| 149 | 1110100100 | 2 | 2 | 9 | 1 | -1 | 0110100100 | -2 | 2 | 9 | 0 | -1 |
| 150 | 1110101110 | 2 | 1 | 5 | 1 | -1 | 0110101110 | -2 | 1 | 5 | 0 | -1 |
| 151 | 1110101011 | 2 | 1 | 5 | 1 | -1 | 0110101011 | -2 | 1 | 5 | 0 | -1 |
| 152 | 1110101001 | 2 | 2 | 9 | 0 | 1 | 0110101001 | -2 | 2 | 9 | 1 | 1 |
| 153 | 1110111010 | 2 | 1 | 5 | 1 | -1 | 0110111010 | -2 | 1 | 5 | 0 | -1 |
| 154 | 1110111111 | 2 | 1 | 5 | 1 | -1 | 0110111111 | -2 | 1 | 5 | 0 | -1 |
| 155 | 1110111101 | 2 | 2 | 9 | 0 | 1 | 0110111101 | -2 | 2 | 9 | 1 | 1 |
| 156 | 1110110101 | 2 | 2 | 9 | 1 | -1 | 0110110101 | -2 | 2 | 9 | 0 | -1 |
| 157 | 1110110111 | 2 | 2 | 13 | 0 | 1 | 0110110111 | -2 | 2 | 13 | 1 | 1 |
| 158 | 1110110010 | 2 | 3 | 21 | 0 | 1 | 0110110010 | -2 | 3 | 21 | 1 | 1 |
| 159 | 1110010010 | 2 | 2 | 9 | 1 | -1 | 0110010010 | -2 | 2 | 9 | 0 | -1 |
| 160 | 1110010111 | 2 | 2 | 9 | 1 | -1 | 0110010111 | -2 | 2 | 9 | 0 | -1 |
| 161 | 1110010101 | 2 | 2 | 13 | 0 | 1 | 0110010101 | -2 | 2 | 13 | 1 | 1 |
| 162 | 1110011101 | 2 | 2 | 13 | 1 | -1 | 0110011101 | -2 | 2 | 13 | 0 | -1 |
| 163 | 1110011111 | 2 | 2 | 17 | 0 | 1 | 0110011111 | -2 | 2 | 17 | 1 | 1 |
| 164 | 1110011010 | 2 | 3 | 25 | 0 | 1 | 0110011010 | -2 | 3 | 25 | 1 | 1 |
| 165 | 1110001001 | 2 | 3 | 21 | 1 | -1 | 0110001001 | -2 | 3 | 21 | 0 | -1 |
| 166 | 1110001011 | 2 | 3 | 25 | 0 | 1 | 0110001011 | -2 | 3 | 25 | 1 | 1 |
| 167 | 1110001110 | 2 | 3 | 33 | 0 | 1 | 0110001110 | -2 | 3 | 33 | 1 | 1 |
| 168 | 1010011100 | 2 | 2 | 13 | 1 | -1 | 0010011100 | -2 | 2 | 13 | 0 | -1 |
| 169 | 1010010110 | 2 | 2 | 9 | 1 | -1 | 0010010110 | -2 | 2 | 9 | 0 | -1 |
| 170 | 1010010011 | 2 | 2 | 9 | 1 | -1 | 0010010011 | -2 | 2 | 9 | 0 | -1 |
| 171 | 1010010001 | 2 | 2 | 13 | 0 | 1 | 0010010001 | -2 | 2 | 13 | 1 | 1 |
| 172 | 1010110100 | 2 | 2 | 9 | 1 | -1 | 0010110100 | -2 | 2 | 9 | 0 | -1 |

EP 0 143 553 B1

TABLE VI (continued)

| | | | | | | | | | | | |
|---|---|---|---|---|---|---|---|---|---|---|---|
| 173 | 1010111110 | 2 | 1 | 5 | 1 | -1 | 0010111110 | -2 | 1 | 5 | 0 | -1 |
| 174 | 1010111011 | 2 | 1 | 5 | 1 | -1 | 0010111011 | -2 | 1 | 5 | 0 | -1 |
| 175 | 1010111001 | 2 | 2 | 9 | 0 | 1 | 0010111001 | -2 | 2 | 9 | 1 | 1 |
| 176 | 1010101010 | 2 | 1 | 5 | 1 | -1 | 0010101010 | -2 | 1 | 5 | 0 | -1 |
| 177 | 1010101111 | 2 | 1 | 5 | 1 | -1 | 0010101111 | -2 | 1 | 5 | 0 | -1 |
| 178 | 1010101101 | 2 | 2 | 9 | 0 | 1 | 0010101101 | -2 | 2 | 9 | 1 | 1 |
| 179 | 1010100101 | 2 | 2 | 9 | 1 | -1 | 0010100101 | -2 | 2 | 9 | 0 | -1 |
| 180 | 1010100111 | 2 | 2 | 13 | 0 | 1 | 0010100111 | -2 | 2 | 13 | 1 | 1 |
| 181 | 1010100010 | 2 | 3 | 21 | 0 | 1 | 0010100010 | -2 | 3 | 21 | 1 | 1 |
| 182 | 1011100100 | 2 | 2 | 9 | 1 | -1 | 0011100100 | -2 | 2 | 9 | 0 | -1 |
| 183 | 1011101110 | 2 | 1 | 5 | 1 | -1 | 0011101110 | -2 | 1 | 5 | 0 | -1 |
| 184 | 1011101011 | 2 | 1 | 5 | 1 | -1 | 0011101011 | -2 | 1 | 5 | 0 | -1 |
| 185 | 1011101001 | 2 | 2 | 9 | 0 | 1 | 0011101001 | -2 | 2 | 9 | 1 | 1 |
| 186 | 1011111010 | 2 | 1 | 5 | 1 | -1 | 0011111010 | -2 | 1 | 5 | 0 | -1 |
| 187 | 1011111111 | 2 | 1 | 5 | 1 | -1 | 0011111111 | -2 | 1 | 5 | 0 | -1 |
| 188 | 1011111101 | 2 | 2 | 9 | 0 | 1 | 0011111101 | -2 | 2 | 9 | 1 | 1 |
| 189 | 1011110101 | 2 | 2 | 9 | 1 | -1 | 0011110101 | -2 | 2 | 9 | 0 | -1 |
| 190 | 1011110111 | 2 | 2 | 13 | 0 | 1 | 0011110111 | -2 | 2 | 13 | 1 | 1 |
| 191 | 1011110010 | 2 | 3 | 21 | 0 | 1 | 0011110010 | -2 | 3 | 21 | 1 | 1 |
| 192 | 1011010010 | 2 | 2 | 9 | 1 | -1 | 0011010010 | -2 | 2 | 9 | 0 | -1 |
| 193 | 1011010111 | 2 | 2 | 9 | 1 | -1 | 0011010111 | -2 | 2 | 9 | 0 | -1 |
| 194 | 1011010101 | 2 | 2 | 13 | 0 | 1 | 0011010101 | -2 | 2 | 13 | 1 | 1 |
| 195 | 1011011101 | 2 | 2 | 13 | 1 | -1 | 0011011101 | -2 | 2 | 13 | 0 | -1 |
| 196 | 1011011111 | 2 | 2 | 17 | 0 | 1 | 0011011111 | -2 | 2 | 17 | 1 | 1 |
| 197 | 1011011010 | 2 | 3 | 25 | 0 | 1 | 0011011010 | -2 | 3 | 25 | 1 | 1 |
| 198 | 1011001001 | 2 | 3 | 21 | 1 | -1 | 0011001001 | -2 | 3 | 21 | 0 | -1 |
| 199 | 1011001011 | 2 | 3 | 25 | 0 | 1 | 0011001011 | -2 | 3 | 25 | 1 | 1 |
| 200 | 1011001110 | 2 | 3 | 33 | 0 | 1 | 0011001110 | -2 | 3 | 33 | 1 | 1 |
| 201 | 1001000100 | 2 | 2 | 13 | 1 | -1 | 0001000100 | -2 | 2 | 13 | 0 | -1 |
| 202 | 1001001110 | 2 | 2 | 9 | 1 | -1 | 0001001110 | -2 | 2 | 9 | 0 | -1 |
| 203 | 1001001011 | 2 | 2 | 9 | 1 | -1 | 0001001011 | -2 | 2 | 9 | 0 | -1 |
| 204 | 1001001001 | 2 | 2 | 13 | 0 | 1 | 0001001001 | -2 | 2 | 13 | 1 | 1 |
| 205 | 1001011010 | 2 | 2 | 9 | 1 | -1 | 0001011010 | -2 | 2 | 9 | 0 | -1 |
| 206 | 1001011111 | 2 | 2 | 9 | 1 | -1 | 0001011111 | -2 | 2 | 9 | 0 | -1 |
| 207 | 1001011101 | 2 | 2 | 13 | 0 | 1 | 0001011101 | -2 | 2 | 13 | 1 | 1 |
| 208 | 1001010101 | 2 | 2 | 13 | 1 | -1 | 0001010101 | -2 | 2 | 13 | 0 | -1 |
| 209 | 1001010111 | 2 | 2 | 17 | 0 | 1 | 0001010111 | -2 | 2 | 17 | 1 | 1 |
| 210 | 1001010010 | 2 | 3 | 25 | 0 | 1 | 0001010010 | -2 | 3 | 25 | 1 | 1 |
| 211 | 1001110010 | 2 | 2 | 13 | 1 | -1 | 0001110010 | -2 | 2 | 13 | 0 | -1 |
| 212 | 1001110111 | 2 | 2 | 13 | 1 | -1 | 0001110111 | -2 | 2 | 13 | 0 | -1 |
| 213 | 1001110101 | 2 | 2 | 17 | 0 | 1 | 0001110101 | -2 | 2 | 17 | 1 | 1 |
| 214 | 1001111101 | 2 | 2 | 17 | 1 | -1 | 0001111101 | -2 | 2 | 17 | 0 | -1 |
| 215 | 1001111111 | 2 | 2 | 21 | 0 | 1 | 0001111111 | -2 | 2 | 21 | 1 | 1 |
| 216 | 1001111010 | 2 | 3 | 29 | 0 | 1 | 0001111010 | -2 | 3 | 29 | 1 | 1 |
| 217 | 1001101001 | 2 | 3 | 25 | 1 | -1 | 0001101001 | -2 | 3 | 25 | 0 | -1 |
| 218 | 1001101011 | 2 | 3 | 29 | 0 | 1 | 0001101011 | -2 | 3 | 29 | 1 | 1 |
| 219 | 1001101110 | 2 | 3 | 37 | 0 | 1 | 0001101110 | -2 | 3 | 37 | 1 | 1 |
| 220 | 0100001110 | 2 | 3 | 37 | 0 | 1 | 1100001110 | -2 | 3 | 37 | 1 | 1 |
| 221 | 0100001011 | 2 | 3 | 29 | 0 | 1 | 1100001011 | -2 | 3 | 29 | 1 | 1 |
| 222 | 0100001001 | 2 | 3 | 25 | 1 | -1 | 1100001001 | -2 | 3 | 25 | 0 | -1 |
| 223 | 0100011010 | 2 | 3 | 29 | 0 | 1 | 1100011010 | -2 | 3 | 29 | 1 | 1 |
| 224 | 0100011111 | 2 | 2 | 21 | 0 | 1 | 1100011111 | -2 | 2 | 21 | 1 | 1 |
| 225 | 0100011101 | 2 | 2 | 17 | 1 | -1 | 1100011101 | -2 | 2 | 17 | 0 | -1 |
| 226 | 0100010101 | 2 | 2 | 17 | 0 | 1 | 1100010101 | -2 | 2 | 17 | 1 | 1 |
| 227 | 0100010111 | 2 | 2 | 13 | 1 | -1 | 1100010111 | -2 | 2 | 13 | 0 | -1 |
| 228 | 0100010010 | 2 | 2 | 13 | 1 | -1 | 1100010010 | -2 | 2 | 13 | 0 | -1 |
| 229 | 0100110010 | 2 | 3 | 25 | 0 | 1 | 1100110010 | -2 | 3 | 25 | 1 | 1 |
| 230 | 0100110111 | 2 | 2 | 17 | 0 | 1 | 1100110111 | -2 | 2 | 17 | 1 | 1 |
| 231 | 0100110101 | 2 | 2 | 13 | 1 | -1 | 1100110101 | -2 | 2 | 13 | 0 | -1 |

TABLE VI (continued)

| 232 | 0100111101 | 2 | 2 | 13 | 0 | 1 | 1100111101 | -2 | 2 | 13 | 1 | 1 |
|---|---|---|---|---|---|---|---|---|---|---|---|---|
| 233 | 0100111111 | 2 | 2 | 9 | 1 | -1 | 1100111111 | -2 | 2 | 9 | 0 | -1 |
| 234 | 0100111010 | 2 | 2 | 9 | 1 | -1 | 1100111010 | -2 | 2 | 9 | 0 | -1 |
| 235 | 0100101001 | 2 | 2 | 13 | 0 | 1 | 1100101001 | -2 | 2 | 13 | 1 | 1 |
| 236 | 0100101011 | 2 | 2 | 9 | 1 | -1 | 1100101011 | -2 | 2 | 9 | 0 | -1 |
| 237 | 0100101110 | 2 | 2 | 9 | 1 | -1 | 1100101110 | -2 | 2 | 9 | 0 | -1 |
| 238 | 0100100100 | 2 | 2 | 13 | 1 | -1 | 1100100100 | -2 | 2 | 13 | 0 | -1 |
| 239 | 0101100010 | 2 | 3 | 25 | 0 | 1 | 1101100010 | -2 | 3 | 25 | 1 | 1 |
| 240 | 0101100111 | 2 | 2 | 17 | 0 | 1 | 1101100111 | -2 | 2 | 17 | 1 | 1 |
| 241 | 0101100101 | 2 | 2 | 13 | 1 | -1 | 1101100101 | -2 | 2 | 13 | 0 | -1 |
| 242 | 0101101101 | 2 | 2 | 13 | 0 | 1 | 1101101101 | -2 | 2 | 13 | 1 | 1 |
| 243 | 0101101111 | 2 | 2 | 9 | 1 | -1 | 1101101111 | -2 | 2 | 9 | 0 | -1 |
| 244 | 0101101010 | 2 | 2 | 9 | 1 | -1 | 1101101010 | -2 | 2 | 9 | 0 | -1 |
| 245 | 0101111001 | 2 | 2 | 13 | 0 | 1 | 1101111001 | -2 | 2 | 13 | 1 | 1 |
| 246 | 0101111011 | 2 | 2 | 9 | 1 | -1 | 1101111011 | -2 | 2 | 9 | 0 | -1 |
| 247 | 0101111110 | 2 | 2 | 9 | 1 | -1 | 1101111110 | -2 | 2 | 9 | 0 | -1 |
| 248 | 0101110100 | 2 | 2 | 13 | 1 | -1 | 1101110100 | -2 | 2 | 13 | 0 | -1 |
| 249 | 0101010001 | 2 | 2 | 17 | 0 | 1 | 1101010001 | -2 | 2 | 17 | 1 | 1 |
| 250 | 0101010011 | 2 | 2 | 13 | 1 | -1 | 1101010011 | -2 | 2 | 13 | 0 | -1 |
| 251 | 0101010110 | 2 | 2 | 13 | 1 | -1 | 1101010110 | -2 | 2 | 13 | 0 | -1 |
| 252 | 0101011100 | 2 | 2 | 17 | 1 | -1 | 1101011100 | -2 | 2 | 17 | 0 | -1 |
| 253 | 0111000010 | 2 | 3 | 29 | 0 | 1 | 1111000010 | -2 | 3 | 29 | 1 | 1 |
| 254 | 0111000111 | 2 | 2 | 21 | 0 | 1 | 1111000111 | -2 | 2 | 21 | 1 | 1 |
| 255 | 0111000101 | 2 | 2 | 17 | 1 | -1 | 1111000101 | -2 | 2 | 17 | 0 | -1 |
| 256 | 0111001101 | 2 | 2 | 17 | 0 | 1 | 1111001101 | -2 | 2 | 17 | 1 | 1 |
| 257 | 0111001111 | 2 | 2 | 13 | 1 | -1 | 1111001111 | -2 | 2 | 13 | 0 | -1 |
| 258 | 0111001010 | 2 | 2 | 13 | 1 | -1 | 1111001010 | -2 | 2 | 13 | 0 | -1 |
| 259 | 0111011001 | 2 | 2 | 17 | 0 | 1 | 1111011001 | -2 | 2 | 17 | 1 | 1 |
| 260 | 0111011011 | 2 | 2 | 13 | 1 | -1 | 1111011011 | -2 | 2 | 13 | 0 | -1 |
| 261 | 0111011110 | 2 | 2 | 13 | 1 | -1 | 1111011110 | -2 | 2 | 13 | 0 | -1 |
| 262 | 0111010100 | 2 | 2 | 17 | 1 | -1 | 1111010100 | -2 | 2 | 17 | 0 | -1 |
| 263 | 0111110001 | 2 | 2 | 21 | 0 | 1 | 1111110001 | -2 | 2 | 21 | 1 | 1 |
| 264 | 0111110011 | 2 | 2 | 17 | 1 | -1 | 1111110011 | -2 | 2 | 17 | 0 | -1 |
| 265 | 0111110110 | 2 | 2 | 17 | 1 | -1 | 1111110110 | -2 | 2 | 17 | 0 | -1 |
| 266 | 0111111100 | 2 | 2 | 21 | 1 | -1 | 1111111100 | -2 | 2 | 21 | 0 | -1 |
| 267 | 0110100001 | 2 | 3 | 29 | 0 | 1 | 1110100001 | -2 | 3 | 29 | 1 | 1 |
| 268 | 0110100011 | 2 | 3 | 25 | 1 | -1 | 1110100011 | -2 | 3 | 25 | 0 | -1 |
| 269 | 0110100110 | 2 | 3 | 25 | 1 | -1 | 1110100110 | -2 | 3 | 25 | 0 | -1 |
| 270 | 0110101100 | 2 | 3 | 29 | 1 | -1 | 1110101100 | -2 | 3 | 29 | 0 | -1 |
| 271 | 0010000111 | 2 | 3 | 29 | 0 | 1 | 1010000111 | -2 | 3 | 29 | 1 | 1 |
| 272 | 0010000101 | 2 | 3 | 25 | 1 | -1 | 1010000101 | -2 | 3 | 25 | 0 | -1 |
| 273 | 0010001101 | 2 | 3 | 25 | 0 | 1 | 1010001101 | -2 | 3 | 25 | 1 | 1 |
| 274 | 0010001111 | 2 | 3 | 21 | 1 | -1 | 1010001111 | -2 | 3 | 21 | 0 | -1 |
| 275 | 0010001010 | 2 | 3 | 21 | 1 | -1 | 1010001010 | -2 | 3 | 21 | 0 | -1 |
| 276 | 0010011001 | 2 | 3 | 25 | 0 | 1 | 1010011001 | -2 | 3 | 25 | 1 | 1 |
| 277 | 0010011011 | 2 | 3 | 21 | 1 | -1 | 1010011011 | -2 | 3 | 21 | 0 | -1 |
| 278 | 0010011110 | 2 | 3 | 21 | 1 | -1 | 1010011110 | -2 | 3 | 21 | 0 | -1 |
| 279 | 0010010100 | 2 | 3 | 25 | 1 | -1 | 1010010100 | -2 | 3 | 25 | 0 | -1 |
| 280 | 0010110001 | 2 | 3 | 29 | 0 | 1 | 1010110001 | -2 | 3 | 29 | 1 | 1 |
| 281 | 0010110011 | 2 | 3 | 25 | 1 | -1 | 1010110011 | -2 | 3 | 25 | 0 | -1 |
| 282 | 0010110110 | 2 | 3 | 25 | 1 | -1 | 1010110110 | -2 | 3 | 25 | 0 | -1 |
| 283 | 0010111100 | 2 | 3 | 29 | 1 | -1 | 1010111100 | -2 | 3 | 29 | 0 | -1 |
| 284 | 0011100001 | 2 | 3 | 37 | 0 | 1 | 1011100001 | -2 | 3 | 37 | 1 | 1 |
| 285 | 0011100011 | 2 | 3 | 33 | 1 | -1 | 1011100011 | -2 | 3 | 33 | 0 | -1 |
| 286 | 0011100110 | 2 | 3 | 33 | 1 | -1 | 1011100110 | -2 | 3 | 33 | 0 | -1 |
| 287 | 0011101100 | 2 | 3 | 37 | 1 | -1 | 1011101100 | -2 | 3 | 37 | 0 | -1 |

When 256 combinations suitable for being corresponding to 8-bit data or information are selected from the 287 possible combinations in Table VI, it is sufficient to select them considering a combination easy for conversion, namely, a combination having a first bit of the same polarity as that of the first bit of, for example, the 8-bit information, or a combination in which the variance (DV) of the DSV is small.

In Table VI, the combinations or codes of Nos. 103 to 116 and Nos. 201 to 219 which begin with "0001 . . ." are usable only when $Q' = 1$ is satisfied, or the DSV is +1.

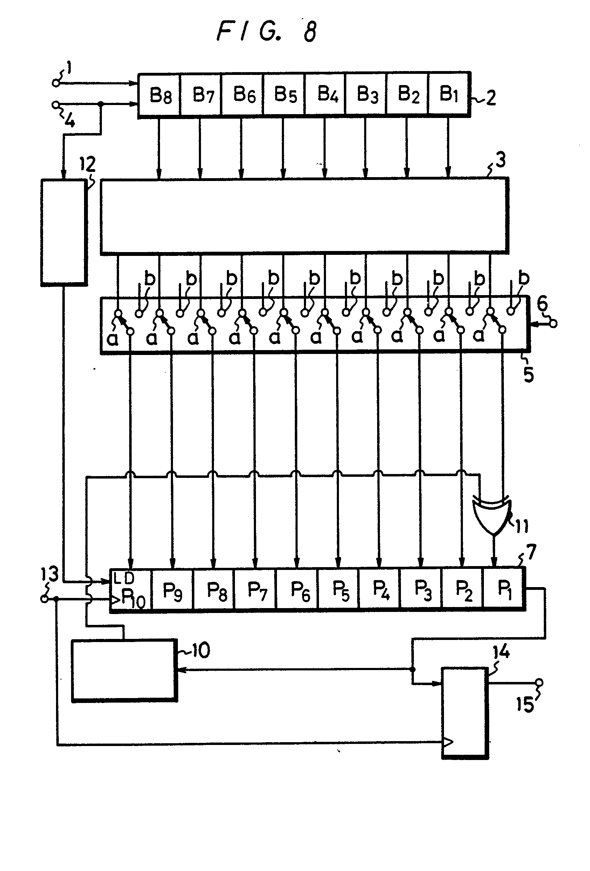

Figure 8 illustrates an example of an apparatus for carrying out the conversion in accordance with the conversion method of this invention. In Figure 8, like parts corresponding to those in Figure 5 have the same references and will not be described in detail.

Upon conversion, the first bit of all combinations is made variable, so that the conversion apparatus of Figure 8 does not require a detecting circuit to detect whether the first bit is variable or fixed, namely, the detecting or controlling circuit 8 for controlling the combination with a DC component of zero (the first bit is fixed) and the combination with a DC component of +2 DC (the first bit is variable) as shown in Figure 5 and so on.

In this embodiment, the output of the detecting circuit 10 for detecting the DC component (DSV) is directly supplied to one input terminal of the ex-OR circuit 11. The other circuit arrangements are the same as those in Figure 5.

The output of the conversion logic circuit 3 must be unified by a combination having a first bit such that the DSV thereof up to that time is either −1 or +1. Accordingly, if the output of the conversion logic circuit 3 is unified, for example, to be DSV = +1, when the DSV of a converted combination begins with −1, the high level output from the detecting circuit 10 is supplied to the ex-OR circuit 11, in which the first bit of such output is inverted in polarity, and is then fed to the shift register 7.

Similarly to the above, the content of the shift register 7 is read out on the basis of the clock signal supplied thereto from the clock terminal 13, fed to the flip-flop circuit 14, and then developed at the output terminal 15 as the NRZI-coded signal.

As described above, without using the detecting circuit 8 (and the AND circuit 9), it is possible to carry out the 8/10-conversion.

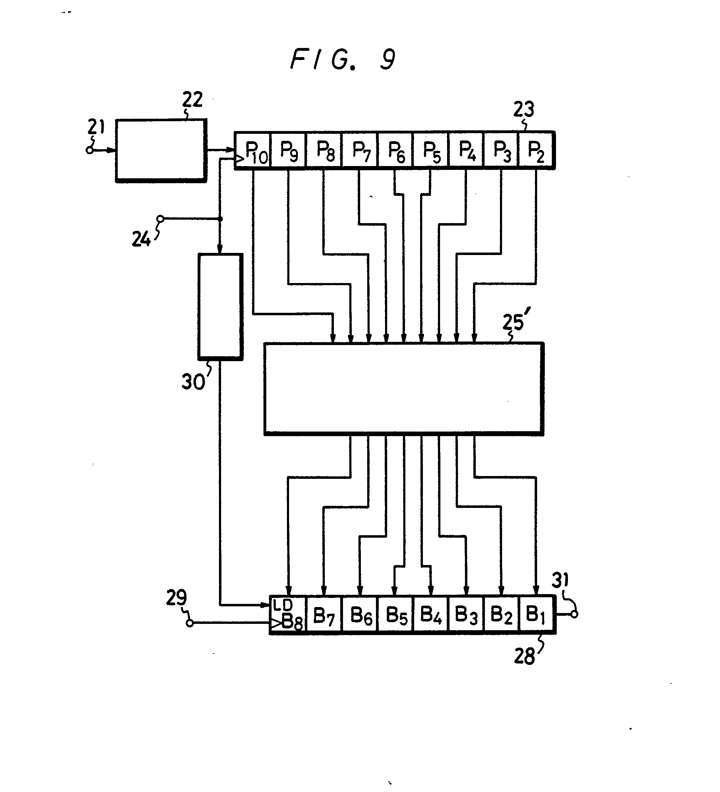

Figure 9 illustrates an example of a demodulation apparatus. In Figure 9, like parts corresponding to those in Figure 6 have the same references and will not be described in detail.

While in this embodiment, upon conversion, the first bit of all combinations is made variable, upon demodulation or reverse conversion, this variable first bit is merely used to enhance the DC property and is not directly related to the data words, so that the nine bits other than the first bit are supplied from the shift register 23 to a conversion logic circuit 25. Accordingly, in this case, this conversion logic circuit 25 is not of the 10/8-conversion type but may be of a 9/8-conversion type, so the circuit arrangement is simplified. In association therewith, the detecting circuit 26 and the ex-OR circuit 27 used in Figure 6 become unnecessary.

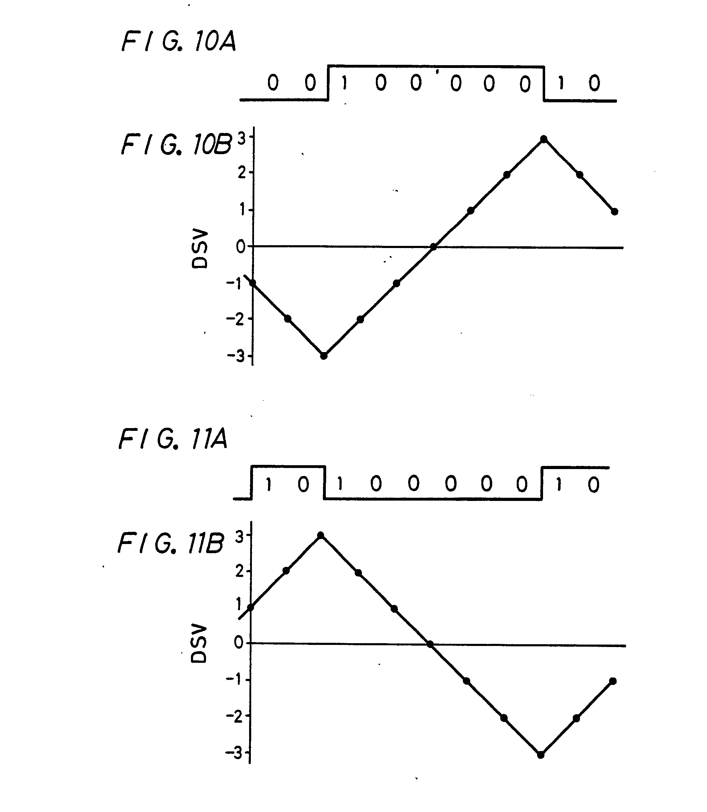

Figures 10A and 10B and Figures 11A and 11B respectively illustrate an example of a sync pattern used in this embodiment. The sync pattern shown in Figures 10A and 10B is used when DSV = −1 is established, while the sync pattern shown in Figures 11A and 11B is used when DSV = −1 is established. This sync pattern is a combination which cannot be realised in the ordinary conversion, so as to detect the groups of ten bits at the time of demodulation. In this embodiment, the patterns of $T_{max} = 6T'$ as shown in Figures 10A and 10B and Figures 11A and 11B are used. Although the pattern of $T_{max} = 6T$ may have any waveform, under the condition of (DSV) is greater than or equal to 3 as mentioned above, only the patterns as shown in Figures 10A and 10B and Figures 11A and 11B can be realised. For example, when the output of the conversion logic circuit 3 is unified by a combination having a first bit such that DSV = +1 (namely, the DC component is −2) is established and then supplied, the sync pattern as shown in Figures 11A and 11B is set at the contact $b$ of the selector 5 in Figure 8.

While in this embodiment, the conversion of 8-bit information to 10-bit information is explained as an example, the invention is not limited to this case, but can similarly be applied to other cases in which m-bit information is converted to n-bit information, in which n is greater than m.

As set forth above, when m-bit information is converted to n-bit information, in which n is greater than m, all the first bits of the respective combinations of converted n-bit information which respectively correspond to converted m-bit information are made variable. In the signal after being modulated, predetermined consecutive bits in the same level are permitted, for example, five bits (up to four consecutive digital zeroes) are permitted in the cse of 8/10 conversion and good combinations are selected on the basis of the DC component up to that time. Thus, the DSV variance becomes small and the low frequency component can be reduced so that the bit error ratio can be improved, and high density recording and transmission become possible. Moreover, upon conversion, each first bit of all the combinations is made variable, so that the circuit for detecting whether the first bit is variable or not becomes unnecessary. Furthermore, upon reverse-conversion, the first bit is ignored, so that the conversion logic circuit can be simplified.

## Claims

1. A method of converting a basic digital signal into a converted digital signal having at least two signal levels, a DC component substantially equal to zero, and a predetermined maximum time between level transitions, the method comprising the steps of:

dividing said basic digital signal into a series of basic words, each word having m bits of data;

converting said basic digital signal into said converted digital signal by matching a converted word with each of said basic words, each of said converted words having n bits of data, wherein n is greater than m + 1, and a predetermined maximum number of consecutive digital zeros; and

generating said converted signal as a non-return to zero, inverted (NRZI)-coded digital signal;

said converted words including a plurality of primary combinations of n bits having a DC component substantially equal to zero when NRZI-coded, and a plurality of secondary combinations of n bits having a DC component with an absolute value of two when NRZI-coded, each of said primary and secondary combinations comprising two complementary combinations differing in variance of DC component when NRZI-coded;

each of said primary combinations being chosen from said two complementary combinations differing only in the first bit of data thereof, and each of said secondary combinations also being chosen from two complementary combinations differing only in the first bit of data thereof;

a control signal being generated in response to a DC component in the preceding said converted signal; and

the first bit of data next to said primary or secondary combination being inverted in response to said control signal.

2. A method according to claim 1 wherein m is eight, n is ten and said converted signal has a maximum of four consecutive digital zeroes.

3. A method according to claim 2, wherein said digital signals are bi-level signals, said primary combinations each begin with a maximum of three digital zeroes, end with a maximum of two digital zeroes and have a maximum of four consecutive digital zeroes anywhere therein, and said secondary combinations begin with a maximum of three digital zeroes, end with a maximum of two digital zeroes and have a maximum of four consecutive digital zeroes anywhere.

4. A converting apparatus for converting a basic digital signal into a converted digital signal having at least two signal levels, a DC component substantially equal to zero, and a predetermined maximum time between level changes, the apparatus comprising:

dividing means (2) for dividing said basic digital signal into a series of basic words, each with m bits of data;

memory means (3) for converting said basic digital signal into a converted digital signal by matching a converted word with each of said basic words, each of said converted words having n bits of data, wherein n is greater than m + 1, and a predetermined maximum number of consecutive digital zeroes; and

modulating means (14) for providing said converted signal in a non-return to zero, inverted (NRZI) code;

said converted words including a plurality of primary combinations of n bits having a DC component substantially equal to zero when NRZI-coded, and a plurality of secondary combinations of n bits having a DC component with an absolute value of two when NRZI-coded;

altering means (5) for altering a variance of the DC component of said primary combination when NRZI-coded and a polarity of said DC component of said secondary combination when NRZI-coded; and

combining means (7) for accepting said converted words from said memory means (3) and providing said converted words to form said converted signal;

wherein said dividing means (2) includes a first register (2) for supplying m bits of said basic digital signal to said memory means (3), said memory means (3) provides each of said primary combinations of n bits having a DC component substantially equal to zero when NRZI-coded and said secondary combinations of n bits having a DC component with an absolute value of two when NRZI-coded, and said altering means (5) includes detecting means (6) for providing a control signal in response to a DC component in the preceding said converted digital signal, and inverting means (11) for inverting the first bit of data next to said converted word, and said combining means (7) includes a second register (7).

5. Apparatus according to claim 4 wherein m is eight and n is ten.

6. A converting apparatus according to claim 4 or claim 5 wherein said inverting means (11) includes an OR circuit (11) for accepting said detection signal and supplying as the output of said OR circuit (11) the first bit of data of said converted word to said second register (7).

## Patentansprüche

1. Verfahren zur Konversion eines digitalen Grundsignals in ein konvertiertes digitales Signal, das zumindest zwei Signalpegel, einen Gleichanteil, der im wesentlichen gleich Null ist, und eine vorbestimmte Maximaldauer zwischen Pegelübergängen hat, welches Verfahren Schritte enthält zum

Unterteilen des digitalen Grundsignals in eine Reihe von Grundwörtern, wobei jedes Wort m Bits der Daten enthält,

Konvertieren des digitalen Grundsignals in das konvertierte digitale Signal durch Vergleichen eines konvertierten Worts mit jedem der Grundwörter, wobei jedes der konvertierten Wörter n Bits der Daten, mit n größer als m + 1, und eine vorbestimmte maximale Anzahl von aufeinanderfolgenden digitalen Nullen

hat, und

Erzeugen des konvertierten Signals als ein invertiertes "Ohne-Rückkehr-nach-Null" (NRZI)-codiertes digitales Signal,

wobei die konvertierten Wörter eine Vielzahl primärer Kombinationen von n Bits, die einen Gleichanteil haben, der im wesentlichen gleich Null ist, wenn NRZI-codiert ist, und eine Vielzahl sekundärer Kombinationen von n Bits enthalten, die einen Gleichanteil mit einem absoluten Wert von Zwei haben, wenn NRZI-codiert ist, wobei jede der primären und sekundären Kombinationen aus zwei komplementären Kombinationen besteht, die in ihrer Varianz der Gleichanteile differieren, wenn NRZI-codiert ist,

wobei jede der primären Kombinationen, die aus den zwei komplementären Kombinationen ausgewählt ist, nur in dem ersten Bit der Daten derselben differiert und jede der sekundären Kombinationen, die ebenfalls aus zwei komplementären Kombinationen ausgewählt ist, nur in dem ersten Bit der Daten derselben differiert,

wobei ein Steuersignal in Reaktion auf einen Gleichanteil in dem vorhergehenden konvertierten Signal erzeugt wird und

wobei das erste Bit der Daten neben der primären oder sekundären Kombination in Reaktion auf das Steuersignal invertiert wird.

2. Verfahren nach Anspruch 1, bei dem m = 8 ist, n = 10 ist und das konvertierte Signal ein Maximum von vier aufeinanderfolgenden digitalen Nullen hat.

3. Verfahren nach Anspruch 2, bei dem die digitalen Signale Zweipegel-Signale sind, die primären Kombinationen jeweils mit einem Maximum von drei digitalen Nullen beginnen, mit einem Maximum von zwei digitalen Nullen enden und ein Maximum von vier aufeinanderfolgenden digitalen Nullen an irgendeiner Stelle in sich enthalten und die sekundären Kombination mit einem Maximum von drei digitalen Nullen beginnen, mit einem Maximum von zwei digitalen Nullen enden und ein Maximum von vier aufeinanderfolgenden digitalen Nullen an irgendeiner Stelle in sich enthalten.

4. Konversionsgerät zum Konvertieren eines digitalen Grundsignals in ein konvertiertes digitales Signal, das zumindest zwei Signalpegel, einen Gleichanteil, der im wesentlichen gleich Null ist, und eine vorbestimmte Maximaldauer zwischen Pegeländerungen hat, welches Gerät enthält;

ein Unterteilungsmittel (2) zum Unterteilen des digitalen Grundsignals in eine Reihe von Grundwörtern, wovon jedes m Bits der Daten enthält,

ein Speichermittel (3) zum Konvertieren des digitalen Grundsignals in ein konvertiertes digitales Signal durch Vergleichen eines konvertierten Worts mit jedem der Grundwörter, wobei jedes der konvertierten Wörter n Bits der Daten, mit n größer als m + 1, und eine vorbestimmte maximale Anzahl aufeinanderfolgender digitaler Nullen hat,

und ein Modulationsmittel (14) zum Erzeugen des konvertierten Signals in Form eines invertierten "Ohne-Rückkehr-nach-Null" (NRZI)-Code,

wobei die konvertierten Wörter eine Vielzahl primärer Kombinationen von n Bits, die einen Gleichanteil, der im wesentlichen gleich Null ist, wenn NRZI-codiert ist, und eine Vielzahl sekundärer Kombinationen von n Bits enthalten, die einen Gleichanteil mit einem absoluten Wert von Zwei haben, wenn NRZI-codiert ist,

ein Umänderungsmittel (5) zum Umändern einer Varianz des Gleichanteils der primären Kombination, wenn NRZI-codiert ist, und einer Polarität des Gleichanteils der sekundären Kombination, wenn NRZI-codiert ist, und

ein Kombinationsmittel (7) zum Aufnehmen der konvertierten Wörter aus dem Speichermittel (3) und zum Ausgeben der konvertierten Wörter, um das konvertierte Signal zu bilden,

wobei das Unterteilungsmittel (2) ein erstes Register (2) zum Ausgeben von m Bits des digitalen Grundsignals an das Speichermittel (3) enthält, das Speichermittel (3) jede der primären Kombinationen von n Bits, die einen Gleichanteil haben, der im wesentlichen gleich Null ist, wenn NRZI-codiert ist, und der sekundären Kombinationen von n Bits bereitstellt, die einen Gleichanteil mit einem absoluten Wert von Zwei haben, wenn NZRI-codiert ist, das Abänderungsmittel (5) ein Erfassungsmittel (6) zum Liefern eines Steuersignals in Reaktion auf einen Gleichanteil in dem vorhergehenden konvertierten digitalen Signal und ein invertierendes Mittel (11) zum Invertieren des ersten Bits der Daten neben dem Konvertierten Wort enthält, und das Kombinationsmittel (7) ein zweites Register (7) enthält.

5. Gerät nach Anspruch 4, bei dem m = 8 und n = 10 ist.

6. Konversionsgerät nach Anspruch 4 oder Anspruch 5, bei dem das invertierende Mittel (11) eine ODER-Schaltung (11) zum Aufnehmen des Erfassungssignals und zum Ausgeben des ersten Bits der Daten des konvertierten Worts als das Ausgangssignal der ODER-Schaltung (11) an das zweite Register (7) enthält.

## Revendications

1. Procédé de conversion d'un signal numérique de base en un signal numérique converti ayant au moins deux niveaux de signal, une composante de courant continu CC sensiblement égale à zéro, et un temps maximal prédéterminé entre les transitions de niveau, le procédé consistant à:

diviser le signal numérique de base en une série de mots de base, chaque mot comportant m bits de données;

21

convertir le signal numérique de base en signal numérique converti en mettant en correspondance un mot converti avec chacun des mots de base, chacun des mots convertis comportant n bits de données, où n est supérieur à (m + 1), et un nombre maximal prédéterminé de zéros numériques consécutifs; et à

engendrer le signal converti comme un signal numérique codé en non-retour à zéro et inversé (NRZI);

les mots convertis incluant un ensemble de combinaisions primaires de n bits comportant une composante CC sensiblement égale à zéro en codage NRZI, et un ensemble de combinaisions secondaires de n bits comportant une composante CC de valeur absolue deux en codage NRZI, chacune des combinaisons primaires et secondaires comprenant deux combinaisons complémentaires différant en variance de composante CC en codage NRZI;

chacune des combinaisons primaires étant choisie parmi les deux combinaisons complémentaires ne différant que par leur premier bit de données, et chacune des combinaisons secondaires étant aussi choisie parmi deux combinaisons complémentaires ne différant que par leur premier bit de données;

un signal de commande étant engendré en réponse à une composant CC dans le signal converti précédent; et

le premier bit de données suivant la combinaison primaire ou secondaire étant inversé en réponse au signal de commande.

2. Procédé selon la revendication 1, dans lequel m est égal à huit, n est égal à dix et le signal converti comporte un maximum de quatre zéros numériques consécutifs.

3. Procédé selon la revendication 2, dans lequel les signaux numériques sont des signaux à deux niveaux, les combinaisons primaires commencent chacune par un maximum de trois zéros numériques, finissent par un maximum de deux zéros numériques et comportent un maximum de quatre zéros numériques consécutifs n'importe où dans celles-ci, et les combinaisons secondaires commencent par un maximum de trois zéros numériques, finissent par un maximum de deux zéros numériques et comportent un maximum de quatre zéros numériques consécutifs n'importe où.

4. Dispositif de conversion pour convertir un signal numérique de base en un signal numérique converti ayant au moins deux niveaux de signal, une composante de courant continu CC sensiblement égale à zéro, et un temps maximal prédéterminé entre les changements de niveau, le dispositif comprenant;

un moyen diviseur (2) pour diviser le signal numérique de base en une série de mots de base, chacun comportant m bits de données;

un moyen à mémoire (3) pour convertir le signal numérique de base en un signal numérique converti par la mise en correspondance d'un mot converti avec chacun des mots de base, chacun des mots convertis comportant n bits de données, n étant supérieur à (m + 1), et un nombre maximal prédéterminé de zéros numériques consécutifs; et

un moyen modulateur (14) pour fournir le signal converti dans un code de non-retour à zéro inversé (NRZI);

les mots convertis incluant un ensemble de combinaisons primaires de n bits comportant une composante CC sensiblement égale à zéro en codage NRZI, et un ensemble de combinaisons secondaires de n bits comportant une composante CC de valeur absolue deux en codage NRZI;

un moyen de changement (5) pour changer la variance de la composante CC de la combinaison primaire en codage NRZI et la polarité de la composante CC de la combinaison secondaire en codage NRZI; et

un moyen de combinaison (7) pour accepter les mots convertis provenant du moyen à mémoire (3) et fournir les mots convertis afin de constituer le signal converti;

dans lequel le moyen diviseur (2) comprend un premier registre (2) pour fournir m bits du signal numérique de base au moyen à mémoire (3), le moyen à mémoire (3) fournit chacune des combinaisons primaires de n bits comportant une composante CC sensiblement égale à zéro en codage NRZI et les combinaisons secondaires de n bits comportant une composante CC de valeur absolue deux en codage NRZI, et le moyen de changement (5) comprend un moyen de détection (6) pour fournir un signal de commande en réponse à une composante CC dans le signal numérique converti précédent, et un moyen inverseur (11) pour inverser le premier bit de données suivant le mot converti, et le moyen de combinaison (7) comprend un deuxième registre (7).

5. Dispositif selon la revendication 4, dans lequel m est égal à huit et n est égal à dix.

6. Dispositif de conversion selon l'une quelconque des revendications 4 et 5, dans lequel le moyen inverseur (11) comprend un circuit OU (11) pour accepter le signal de détection et fournir comme signal de sortie du circuit OU (11) le premier bit de données du mot converti au deuxième registre (7).

FIG. 1A

1 1 0 1 1 0 1 0 1 0 →-2

FIG. 1B

0 0 1 1 0 0 1 0 0 1 →-2

FIG. 1C

1 1 0 1 0 0 1 0 1 0 →+2

FIG. 2A

0 0 1 0 1 0 0 1 0 1 →-2

FIG. 2B

① 0 1 0 1 0 0 1 0 1 →+2

FIG. 3A

FIG. 3B

*F I G. 4A*

*F I G. 4B*

FIG. 5

## F I G. 6

## FIG. 7

## F I G. 8

## FIG. 9

*F I G. 10A*

*F I G. 10B*

*F I G. 11A*

*F I G. 11B*